# EUROPÄISCHE PATENTSCHRIFT

(11) **EP 1 832 385 B1**
(45) Veröffentlichungstag und Bekanntmachung des Hinweises auf die Patenterteilung: **22.10.2008**
(21) Anmeldenummer: 06405098.2
(22) Anmeldetag: 07.03.2006
(51) Int. Cl.: B23Q 7/02

(54) **Vorrichtung zur Zuführung von Werkstücken zu einem Drehtisch**
Apparatus for supplying workpieces to a rotary table
Dispositif pour délivrer des pièces à usiner à un plateau tournant

(43) Veröffentlichungstag der Anmeldung: 12.09.2007
(73) Patentinhaber: PackSys Global (Switzerland) Ltd., 3414 Oberburg (CH)
(72) Erfinder: Schabert, Marc, 3322 Schönbühl-Urtenen (CH); Angst, Roman, 8050 Zürich (CH)
(74) Vertreter: Rüfenacht, Philipp Michael

(56) Entgegenhaltungen:
- FR-A- 2 021 290
- FR-A- 2 764 537
- US-A- 3 800 400

## Beschreibung

### Technisches Gebiet

Die Erfindung betrifft eine Vorrichtung zur Zuführung von Werkstücken zu einem um eine erste Achse drehbaren Drehtisch einer Bearbeitungseinrichtung, umfassend einen um eine zur ersten Achse parallele zweite Achse drehbaren Ladestern mit umfangsseitigen Aufnahmen für die Werkstücke, welcher derart ausgebildet ist und angeordnet werden kann, dass bei gleichzeitiger synchronisierter Drehbewegung des Ladesterns und des Drehtischs in nachfolgenden Aufnahmen des Ladesterns aufgenommene Werkstücke nacheinander in entsprechende Aufnahmen des Drehtischs übergeben werden können. Die Erfindung betrifft weiter eine Vorrichtung zum Wegtransport von Werkstücken von einem um eine erste Achse drehbaren Drehtisch einer Bearbeitungseinrichtung, umfassend einen um eine zur ersten Achse parallele zweite Achse drehbaren Entladestern mit umfangsseitigen Aufnahmen für die Werkstücke, welcher derart ausgebildet ist und angeordnet werden kann, dass bei gleichzeitiger synchronisierter Drehbewegung des Drehtischs und des Entladesterns in nachfolgenden Aufnahmen des Drehtischs aufgenommene Werkstücke nacheinander in entsprechende Aufnahmen des Entladesterns übergeben werden können. Die Erfindung betrifft schliesslich eine Bearbeitungsanordnung mit einer Vorrichtung zur Zuführung von Werkstücken, einer Bearbeitungsstation sowie einer Vorrichtung zum Wegtransport von Werkstücken.

### Stand der Technik

Bearbeitungseinrichtungen mit Drehtischen sind bekannt und haben einen breiten Anwendungsbereich. Der Drehtisch kann entlang seines Umfangs mehrere Werkstücke aufnehmen. Mit der schrittweisen oder kontinuierlichen Rotation des Drehtischs werden die Werkstücke durch eine entlang des Umfangs ausgedehnte oder mehrere hintereinander angeordnete Arbeitsstationen bewegt, wo Bearbeitungsvorgänge stattfinden. Nach der Bearbeitung werden die Werkstücke wieder dem Drehtisch entnommen. Auf diese Weise können mehrere vom Drehtisch aufgenommene Werkstücke gleichzeitig bearbeitet werden, was hohe Produktionsgeschwindigkeiten ermöglicht.

Zum Beschicken des Drehtischs mit Werkstücken sind Lösungen bekannt siehe z.B. Dokument FR-A-2.021.290, bei welchen ein um eine vertikale Achse drehbarer Ladestern mit umfangsseitigen Aufnahmen derart angrenzend an den Drehtisch angeordnet ist, dass bei gleichzeitiger synchronisierter Drehbewegung des Ladesterns und des Drehtischs in nachfolgenden Aufnahmen des Ladesterns aufgenommene Werkstücke nacheinander in entsprechende Aufnahmen des Drehtischs übergeben werden können.

Zum Entladen des Drehtischs wird ähnlicherweise oft ein um eine vertikale Achse drehbarer Entladestern eingesetzt mit umfangsseitigen Aufnahmen, welcher wiederum angrenzend an den Drehtisch angeordnet ist, so dass bei gleichzeitiger synchronisierter Drehbewegung des Drehtischs und des Entladesterns in nachfolgenden Aufnahmen des Drehtischs aufgenommene Werkstücke nacheinander in entsprechende Aufnahmen des Entladesterns übergeben werden können.

Damit bei hohen Produktionsgeschwindigkeiten die zu bearbeitenden Werkstücke mit einem genügenden Durchsatz der Bearbeitungseinrichtung zugeführt werden können, sind oft zwei (oder noch mehr) Fördergeräte notwendig, um den Ladestern mit Werkstücken zu beschicken. Die Werkstücke werden somit in zwei (oder mehreren) Bahnen zugeführt. Es stellt sich nun das Problem, wie der bekannte Ladestern nacheinander mit diesen zwei- oder mehrbahnig zugeführten Werkstücken beschickt werden kann.

Ähnlicherweise müssen die Werkstücke nach dem Wegtransport vom Drehtisch oft in zwei oder mehrere Bahnen aufgeteilt werden, z. B. weil nachfolgende Maschinen oder Einrichtungen, zum Beispiel Prüfmaschinen oder Prüfkameras, eine geringere Produktionsgeschwindigkeit haben als die Bearbeitungseinrichtung mit dem Drehtisch.

Oft - insbesondere bei der Fertigung von vergleichsweise kleinen Losen - ist es auch gewünscht, dass in derselben Bearbeitungseinrichtung unterschiedliche (z. B. verschiedenfarbige) Werkstücke denselben Bearbeitungsschritten unterworfen werden sollen. Die zwei- oder mehrbahnige Zuführung hat in dieser Hinsicht den Vorteil, dass unterschiedliche Werkstücke gesondert dem Drehtisch zugeführt werden können. Leerzeiten, wie sie bei der sequenziellen Bearbeitung verschiedener Lose entstehen, z. B. weil zwischen zwei Losen ein "Leerfahren" der Bearbeitungseinrichtung notwendig wird, können vermieden werden. Allerdings stellt sich in diesem Fall das Problem, wie die unterschiedlichen Werkstücke nach der Bearbeitung wieder schnell und zuverlässig sortiert, also zum Beispiel auf mehrere Bahnen aufgeteilt, werden können.

### Darstellung der Erfindung

Aufgabe der Erfindung ist es, dem eingangs genannten technischen Gebiet zugehörende Vorrichtungen zur Zuführung und zum Wegtransport von Werkstücken zu schaffen, welche die mehrbahnige Zu- bzw. Wegführung von Werkstücken erlauben, welche einfach aufgebaut und für hohe Produktionsgeschwindigkeiten geeignet sind.

Die Lösung der Aufgabe ist durch die Merkmale der Ansprüche 1 und 16 definiert. Gemäss der Erfindung weist eine Vorrichtung zur Zuführung von Werkstücken eine erste Zuführeinrichtung auf, welche derart ausgebildet ist, dass sie den Ladestern teilweise mit Werkstücken beschicken kann, sowie eine zweite Zuführeinrichtung, welche in Drehrichtung des Ladesterns vor der ersten Zuführeinrichtung angeordnet und derart ausgebildet ist, dass sie von der ersten Zuführeinrichtung nicht beschickte Aufnahmen des Ladesterns mit Werkstücken beschicken kann.

Analog dazu weist eine Vorrichtung zum Wegtransport von Werkstücken eine erste Wegführeinrichtung auf, welche derart ausgebildet ist, dass sie einen Teil der im Entladestern aufgenommenen Werkstücke aus dem Entladestern wegtransportieren kann, sowie eine zweite Wegführeinrichtung, welche in Drehrichtung des Entladesterns vor der ersten Wegführeinrichtung angeordnet und derart ausgebildet ist, dass sie von der ersten Wegführeinrichtung nicht wegtransportierte, im Entladestern aufgenommene Werkstücke aus dem Entladestern wegtransportieren kann.

Der Ladestern wird somit von zwei oder mehreren Zuführeinrichtungen in zwei oder mehr Stufen mit Werkstücken beschickt; Werkstücke werden in zwei oder mehr Stufen von zwei oder mehreren Wegführeinrichtungen aus dem Entladestern wegtransportiert. Die Beschickung des Ladesterns durch die erste Zuführeinrichtung findet nur teilweise statt, d. h. es werden systematisch nicht alle Aufnahmen des Ladesterns, welche die erste Zuführeinrichtung passieren, mit einem Werkstück beschickt. Die zweite Zuführeinrichtung, welche von den Aufnahmen des Ladesterns nach Durchgang durch die erste Zuführeinrichtung passiert wird, beschickt Aufnahmen des Ladesterns, welche nach Durchgang der ersten Zuführeinrichtung leer verblieben sind. Folgt noch eine dritte Zuführeinrichtung, so erfolgt auch die Beschickung durch die zweite Zuführeinrichtung nur teilweise, d. h. es verbleiben systematisch leere Aufnahmen zur Beschickung durch nachfolgende Zuführeinrichtungen.

Der Wegtransport findet auf die prinzipiell gleiche Weise statt: Die erste Wegführeinrichtung entnimmt systematisch nicht alle im Entladestern aufgenommenen Werkstücke, welche die erste Wegführeinrichtung passieren, sondern belässt Werkstücke zunächst im Entladestern. Sie können in der Folge von der zweiten Wegführeinrichtung (und gegebenenfalls weiteren Wegführeinrichtungen) entnommen und wegtransportiert werden.

Die Vorrichtung zum Zuführen und die Vorrichtung zum Wegtransport verwirklichen somit dasselbe erfindungsgemässe Prinzip. Die bewährte, hohe Produktionsgeschwindigkeiten erlaubende Anordnung mit einem an den Drehtisch angrenzenden Lade- bzw. Entladestern kann weiterhin eingesetzt werden. Dadurch wird auch die Nachrüstbarkeit vorhandener Bearbeitungseinrichtungen sichergestellt. Die erfindungsgemässe Anordnung ermöglicht einen kompakten Aufbau der Bearbeitungseinrichtung mit den zugehörigen Vorrichtungen zum Zuführen und Wegtransportieren.

Für die Zuführung von Werkstücken zum Drehtisch der Bearbeitungseinrichtung kann die erfindungsgemässe Vorrichtung zum Zuführen unabhängig von der verwendeten Vorrichtung zum Wegtransport eingesetzt werden. Die bearbeiteten Werkstücke können beispielsweise direkt vom Drehtisch auf einen Jetstream-Förderer, auf ein Förderband oder in einen Sammelbehälter abgegeben werden.

Ähnlicherweise kann für den Wegtransport von Werkstücken vom Drehtisch der Bearbeitungseinrichtung die erfindungsgemässe Vorrichtung zum Wegtransport unabhängig von der verwendeten Vorrichtung zum Zuführen eingesetzt werden. Besondere Vorteile ergeben sich aber dann, wenn sowohl die Zuführung als auch der Wegtransport mit der jeweiligen erfindungsgemässen Vorrichtung erfolgen, wenn also eine Bearbeitungsanordnung sowohl eine erfindungsgemässe Vorrichtung zur Zuführung als auch eine erfindungsgemässe Vorrichtung zum Wegtransport umfasst. Dies ermöglicht hohe Produktionsgeschwindigkeiten sowohl bei der Zuführung als auch beim weiteren Transport bzw. der weiteren Bearbeitung der Werkstücke nach dem Durchgang durch die Bearbeitungseinrichtung. Zudem können die erfindungsgemässen Vorrichtungen eine geordnete Zuführung und einen geordneten Wegtransport sicherstellen. Unterschiedliche, mehrbahnig zugeführte Werkstücke können somit ohne zusätzlichen Sortieraufwand wieder mehrbahnig weggeführt werden, wobei unterschiedliche Werkstücktypen wieder in unterschiedlichen Bahnen weitertransportiert werden.

Werden die erfindungsgemässe Vorrichtung zum Zuführen und die erfindungsgemässe Vorrichtung zum Wegtransport bei einer Bearbeitungseinrichtung miteinander kombiniert, können die Anzahl der Zuführeinrichtungen (und damit der "Bahnen" auf der Zuführseite) und die Anzahl der Wegführeinrichtungen (und damit der "Bahnen" auf der Wegführseite) miteinander übereinstimmen, sie können aber auch unterschiedlich sein. So kann das Material durchaus z. B. dreibahnig zugeführt und zweibahnig weggeführt werden.

Die erfindungsgemässen Vorrichtungen sind insbesondere für die Bearbeitung von Kunststoffverschlüssen, z. B. in Schneidemaschinen oder Falt- und Schneidemaschinen geeignet, wo eine hohe Produktionsgeschwindigkeit erreicht werden soll. Sie eignen sich aber auch zum Einsatz bei anderen Bearbeitungseinrichtungen mit Drehtischen. Eine Bearbeitungseinrichtung kann auch mehrere Drehtische aufweisen, welche von den Werkstücken nacheinander durchlaufen werden (bei der Bearbeitung von Kunststoffverschlüssen z. B. ein Drehtisch zum Falten und ein Drehtisch zum Einschneiden eines Garantierings). Die Drehtische sind mit Vorteil durch Übergabesterne miteinander verbunden.

Mit Vorteil umfasst die zweite Zuführeinrichtung einer Vorrichtung zum Zuführen von Werkstücken einen als Drehstern ausgebildeten Zwischenstern mit umfangsseitigen Aufnahmen für die Werkstücke. Der Drehstern ist derart ausgebildet und angeordnet, dass bei gleichzeitiger synchronisierter Drehbewegung des Zwischensterns und des Ladesterns in Zwischenstern-Aufnahmen aufgenommene Werkstücke nacheinander in entsprechende Aufnahmen des Ladesterns übergeben werden können.

Dem Zwischenstern vorgeordnet ist vorzugsweise eine Beschickungseinrichtung, welche den Zwischenstern teilweise mit Werkstücken beschicken kann. Die Beschickungseinrichtung beschickt also systematisch nicht alle Aufnahmen des Zwischensterns, welche diese passieren. Somit kann erreicht werden, dass über den Zwischenstern auch der Ladestern von der zweiten Zuführeinrichtung nur teilweise mit Werkstücken beschickt wird.

Die Beschickungseinrichtung ist bevorzugt ein als Drehstern ausgebildeter Beschickungsstern, mit umfangsseitigen Aufnahmen für die Werkstücke. Der Beschickungsstern ist derart ausgebildet und angeordnet, dass bei gleichzeitiger synchronisierter Drehbewegung des Beschickungssterns und des Zwischensterns in Aufnahmen des Beschickungssterns aufgenommene Werkstücke nacheinander in entsprechende Aufnahmen des Zwischensterns übergeben werden können.

Die Beschickung des Zwischensterns muss nicht zwingend durch einen Beschickungsstern erfolgen, es sind auch andersartige Beschickungseinrichtungen möglich, beispielsweise ein linearer Kanal, dessen Achse radial zum Zwischenstern angeordnet ist, oder Greifermittel.

Falls der eingesetzte Zwischenstern und der Ladestern eine teilweise Beschickung des Ladesterns durch die zweite Zuführeinrichtung erlauben, können anstelle des Einsatzes einer Beschickungseinrichtung, welche eine teilweise Beschickung des Ladesterns ermöglicht, zunächst allen Aufnahmen des Zwischensterns, welche die Beschickungseinrichtung passieren, Werkstücke zugeführt werden.

Der Zwischenstern und der Ladestern sind vorzugsweise derart ausgebildet und angeordnet, dass bei gleichzeitiger synchronisierter Drehbewegung des Zwischensterns und des Ladesterns jeweils benachbarte Aufnahmen des Zwischensterns und benachbarte Aufnahmen des Ladesterns nacheinander in einen gegenseitigen Interaktionsbereich bewegt werden. Die Umfangsgeschwindigkeit des Zwischensterns und des Ladesterns und der Abstand nachfolgender Aufnahmen sind also derart aufeinander abgestimmt, dass im Interaktionsbereich (d. h. im Bereich der Verbindungslinie zwischen den Zentren der beiden Sterne, in welchem der Abstand der Sterne minimal ist) jeweils immer auch eine Aufnahme des Zwischensterns ist, wenn sich dort eine Aufnahme des Ladesterns befindet. Am Einfachsten wird eine derartige Funktionsweise realisiert, wenn als Zwischenstern und als Ladestern zwei Elemente mit gleichem Durchmesser und gleichem Abstand zwischen nachfolgenden Aufnahmen eingesetzt werden, wobei beide Sterne mit derselben Winkelgeschwindigkeit rotiert werden. Werden Drehsternelemente unterschiedlichen Durchmessers eingesetzt, muss deren Winkelgeschwindigkeit so aneinander angepasst werden, dass die Umfangsgeschwindigkeit wieder einander entspricht und Taschen beider Elemente, welche miteinander zusammenwirken sollen, gleichzeitig den Interaktionsbereich passieren.

Analog zur Vorrichtung zum Zuführen von Werkstücken umfasst auch die erste Wegführeinrichtung eine Vorrichtung zum Wegtransport von Werkstücken mit Vorteil einen als Drehstern ausgebildeten Zwischenstern mit umfangsseitigen Aufnahmen für die Werkstücke. Der Zwischenstern ist derart ausgebildet und angeordnet, dass bei gleichzeitiger synchronisierter Drehbewegung des Zwischensterns und des Entladesterns in Entladestern-Aufnahmen aufgenommene Werkstücke nacheinander in entsprechende Aufnahmen des Zwischensterns übergeben werden können.

Dem Zwischenstern ist mit Vorteil ein Aufnahmestern nachgeordnet mit umfangsseitigen Aufnahmen für die Werkstücke. Dieser ist derart ausgebildet und angeordnet, dass bei gleichzeitiger synchronisierter Drehbewegung des Zwischensterns und des Aufnahmesterns in Aufnahmen des Zwischensterns aufgenommene Werkstücke nacheinander in entsprechende Aufnahmen des Aufnahmesterns übergeben werden können.

Alternativ werden die Werkstücke direkt vom Zwischenstern an eine andersartige Förder- oder Sammelvorrichtung abgegeben (z. B. auf ein Förderband oder in einen Sammelbehälter).

Der Zwischenstern und der Entladestern sind vorzugsweise derart ausgebildet und angeordnet, dass bei gleichzeitiger synchronisierter Drehbewegung des Zwischensterns und des Entladesterns jeweils benachbarte Aufnahmen des Zwischensterns und benachbarte Aufnahmen des Entladesterns nacheinander in einen gegenseitigen Interaktionsbereich bewegt werden. Die Umfangsgeschwindigkeit des Zwischensterns und des Entladesterns und der Abstand nachfolgender Aufnahmen sind also derart aufeinander abgestimmt, dass im Interaktionsbereich (d. h. im Bereich der Verbindungslinie zwischen den Zentren der beiden Sterne, in welchem der Abstand der Sterne minimal ist) jeweils immer auch eine Aufnahme des Zwischensterns ist, wenn sich dort eine Aufnahme des Entladesterns befindet. Am Einfachsten wird eine derartige Funktionsweise realisiert, wenn als Zwischenstern und als Entladestern zwei Elemente mit gleichem Durchmesser und gleichem Abstand zwischen nachfolgenden Aufnahmen eingesetzt werden, wobei beide Sterne mit derselben Winkelgeschwindigkeit rotiert werden.

Bei der Vorrichtung zur Zuführung von Werkstücken umfasst die erste Zuführeinrichtung vorzugsweise einen als Drehstern ausgebildeten Zuführstern mit umfangsseitigen Aufnahmen für die Werkstücke, welcher derart ausgebildet und angeordnet ist, dass bei gleichzeitiger synchronisierter Drehbewegung des Zuführsterns und des Ladesterns in Aufnahmen des Zuführsterns aufgenommene Werkstücke nacheinander in entsprechende Aufnahmen des Ladesterns übergeben werden können.

Entsprechend umfasst bei einer Vorrichtung zum Wegtransport von Werkstücken einen als Drehstern ausgebildeten Wegführstern mit umfangsseitigen Aufnahmen für die Werkstücke, welcher derart ausgebildet und angeordnet ist, dass bei gleichzeitiger synchronisierter Drehbewegung des Entladesterns und des Wegführsterns in Aufnahmen des Entladesterns aufgenommene Werkstücke nacheinander in entsprechende Aufnahmen des Wegführsterns übergeben werden können.

Falls die Werkstücke zweibahnig zugeführt werden, kann eine erfindungsgemässe Vorrichtung zum Zuführen von Werkstücken insbesondere folgende Konfiguration aufweisen. In einem vorgegebenen Zeitintervall T, in welchem eine Anzahl von M Aufnahmen des Ladesterns mit entsprechenden Aufnahmen des Drehtischs zusammenwirken, wirken eine Anzahl von M/2 mit Werkstücken beschickte Aufnahmen des Zuführsterns mit entsprechenden Aufnahmen des Ladesterns zusammen. Dabei wird jede zweite Aufnahme des Ladesterns mit einem Werkstück beschickt. Die Beschickungseinrichtung der zweiten Zuführeinrichtung ist derart ausgebildet, dass jede zweite der mit dem Ladestern zusammenwirkenden Aufnahmen des Zwischensterns mit einem Werkstück beschickt ist. Im Zeitintervall T wirken nun auch eine Anzahl von M Aufnahmen des Zwischensterns mit Aufnahmen des Ladesterns zusammen. Von diesen ist jede zweite mit einem Werkstück beschickt, im Zeitintervall T werden somit M/2 Werkstücke vom Zwischenstern an den Ladestern übergeben, und von denjenigen Aufnahmen aufgenommen, welche nach Durchgang der ersten Beschickungseinrichtung noch leer verblieben waren.

Die Konfiguration ist nun mit Vorteil so gewählt, dass zum teilweisen Beschicken des Zwischensterns im Zeitintervall T eine Anzahl von M/2 Aufnahmen des Beschickungssterns mit entsprechenden Aufnahmen des Zwischensterns zusammenwirken, wobei benachbarte Aufnahmen des Beschickungssterns mit jeweils übernächsten Aufnahmen des Zwischensterns zusammenwirken.

Ähnlicherweise wirken zum teilweisen Beschicken des Ladesterns im Zeitintervall T eine Anzahl von M/2 Aufnahmen des Zuführsterns mit entsprechenden Aufnahmen des Ladesterns zusammen, wobei benachbarte Aufnahmen des Zuführsterns mit jeweils übernächsten Aufnahmen des Ladesterns zusammenwirken.

Für ein zweibahniges Wegführen der Werkstücke kann die Vorrichtung zum Wegtransport analog ausgebildet werden: In einem vorgegebenen Zeitintervall T, in welchem eine Anzahl von M Aufnahmen des Entladesterns mit entsprechenden Aufnahmen des Drehtischs zusammenwirken, wirken auch eine Anzahl von M Aufnahmen des Zwischensterns mit dem Entladestern zusammen. Die Vorrichtung ist nun derart ausgebildet und gesteuert, dass Werkstücke jeder zweiten Aufnahme des Entladesterns aus dem Entladestern in den Zwischenstern transportiert werden, also M/2 Werkstücke im Zeitintervall T. In diesem Zeitintervall T wirken auch eine Anzahl von M/2 noch mit Werkstücken beschickte Aufnahmen des Entladesterns mit entsprechenden Aufnahmen des Wegführsterns zusammen, und die entsprechende Werkstücke werden in den Wegführstern transportiert.

Mit Vorteil ist der Wegführstern derart ausgebildet, dass im Zeitintervall T eine Anzahl von M/2 Aufnahmen des Wegführsterns mit entsprechenden Aufnahmen des Zwischensterns zusammenwirken und je ein Werkstück aufnehmen. Das heisst, benachbarte Aufnahmen des Wegführsterns wirken mit jeweils übernächsten Aufnahmen des Zwischensterns zusammen.

Ähnlicherweise wirken zum Entladen des Zwischensterns im Zeitintervall T eine Anzahl von M/2 Aufnahmen des Wegführsterns mit entsprechenden Aufnahmen des Zwischensterns zusammen, wobei benachbarte Aufnahmen des Wegführsterns mit jeweils übernächsten Aufnahmen des Zwischensterns zusammenwirken. Jede der Aufnahmen des Wegführsterns, welche den Interaktionsbereich mit dem Zwischenstern passiert, nimmt somit ein Werkstück zum Weitertransport auf.

Die Aufnahmen der verschiedenen Drehsternelemente, d. h. des Ladesterns bzw. des Entladesterns und gegebenenfalls auch des Zwischensterns, des Beschickungssterns, des Zuführsterns bzw. des Aufnahmesterns und/oder des Wegführsterns, sind mit Vorteil als umfangsseitig offene Taschen ausgebildet. Ein in einer Tasche eines ersten Drehsternelements aufgenommenes Werkstück kann im Wesentlichen radial in eine Tasche eines benachbarten zweiten Drehsternelements bewegt werden, wenn sich die beiden Taschen in ihrem gegenseitigen Interaktionsbereich (im Bereich der Verbindungslinie zwischen den Drehzentren der beiden beteiligten Drehsternelemente) befinden. Diese Lösung ist konstruktiv einfach und ermöglicht eine einfache und schnelle Übergabe der Werkstücke von einem Drehsternelement zum nächsten. Die Übergabe kann durch zentrifugale Kräfte bewirkt werden, durch die Schwerkraft, wenn das zweite Drehsternelement tiefer liegt als das erste, durch mechanische Mittel wie z. B. Stössel oder durch Druckluft. Die Lösung mit umfangsseitigen Taschen ist besonders für rotationssymmetrische Werkstücke wie z. B. Kunststoffverschlüsse geeignet oder für andere Werkstücke bei welchen es nicht auf eine exakte Ausrichtung in den Aufnahmen ankommt.

Bei dieser Lösung mit umfangsseitigen Taschen kommt der oben beschriebenen bevorzugten Ausbildung der Zwischensterne eine besondere Bedeutung zu. Der Zwischenstern umfasst nämlich Taschen, welche während des Betriebs der Vorrichtung von der Beschickungsvorrichtung nicht mit Werkstücken beschickt werden bzw. welche keine Werkstücke aus dem Entladestern aufnehmen sollen. Diese Taschen wirken trotzdem (wie die beschickten Taschen) mit den Taschen des Lade- bzw. Entladesterns zusammen, wobei jeweils benachbarte Taschen des Zwischensterns mit benachbarten Taschen des Lade- bzw. Entladesterns zusammenwirken. Die nicht beschickten Taschen des Zwischensterns geben im Interaktionsbereich den Weg den bereits im Lade- bzw. Entladestern aufgenommenen, von der ersten Zuführeinrichtung zugeführten oder vom Entladestern entnommenen Werkstücken frei, so dass diese den Interaktionsbereich unbeeinflusst vom Zwischenstern passieren können. Die Werkstücke sind also im Interaktionsbereich teilweise sowohl von den Taschen des Lade- bzw. Entladesterns als auch von den Taschen des Zwischensterns aufgenommen. Durch geeignete Führungselemente (z. B. Aussenführungen oder bewegliche Finger, siehe unten) wird gewährleistet, dass die bereits vorher im Lade- bzw. Entladestern aufgenommenen Werkstücke auch weiterhin in diesem aufgenommen bleiben und mit diesem weitertransportiert werden.

Diese konstruktive Ausbildung und Anordnung der Zwischensterne ermöglicht den Einsatz von Taschen, welche derart ausgebildet sind, dass die Werkstücke im aufgenommenen Zustand über einen Umfang des Drehsternelements nach aussen ragen. Die Taschen sind also verhältnismässig flach, deren Tiefe unterschreitet die entsprechende Ausdehnung der Werkstücke. Somit wird der bei der Übergabe von einem Drehsternelement zum nächsten von den Werkstücken zurückzulegende radiale Weg verringert und eine höhere Produktionsgeschwindigkeit ermöglicht. Ausserdem können die teilweise über die Taschen hinausragenden Werkstücke leichter erfasst und einfacher von einem Element zum nächsten übergeben werden.

Damit die Werkstücke während der Drehbewegung der Drehsternelemente in den umfangsseitigen Taschen gehalten bleiben, können Aussenführungen radial beabstandet umfangsseitig zu mindestens einem der Drehsternelemente angeordnet werden. Diese verhindern, dass sich die Werkstücke während der Drehbewegung aufgrund der zentrifugalen Kräfte aus den Taschen radial nach aussen bewegen können. In den Interaktionsbereichen können die Aussenführungen unterbrochen sein, um eine Übergabe zu einem nachfolgenden Drehsternelement zu ermöglichen.

Die Drehsternelemente sind mit Vorteil im Wesentlichen horizontal orientiert. Aussenführungen können sowohl auf einer Unterseite als auch auf einer Oberseite der Drehsternelemente angeordnet sein. Wird sowohl die Unterseite als auch die Oberseite genutzt, ergibt sich eine erhöhte Flexibilität der Gestaltung der Aussenführungen, besonders in Interaktionsbereichen zwischen benachbarten Drehsternelementen. So kann die Aussenführung des ersten Drehsternelements auf der Oberseite angeordnet sein, während die Aussenführung des nachfolgenden zweiten Drehsternelements auf der Unterseite liegt. Auf diese Weise herrscht bei der Gestaltung der Aussenführungen grösstmögliche Freiheit. Zum Fördern von Werkstücken einer gewissen Höhe werden beispielsweise Drehsternelemente eingesetzt mit einer Dicke, welche ungefähr einem Drittel der Werkstückhöhe entspricht. Die auf der Unter- und auf der Oberseite der Drehsternelemente angeordneten Aussenführungen haben ebenfalls je eine Dicke von ungefähr einem Drittel der Werkstückhöhe. So können die Werkstücke zuverlässig sowohl von den Drehsternelementen als auch von den unten und oben angeordneten Aussenführungen geführt werden.

Bei einer Vorrichtung zur Zuführung von Werkstücken zu einem Drehtisch ist der Zwischenstern (und gegebenenfalls dessen Beschickungseinrichtung) bevorzugt auf einer bezüglich dem Ladestern höheren Ebene angeordnet. Durch diese Anordnung auf mehreren Ebenen wird die Gestaltungsfreiheit der Führungen weiter vergrössert. Die bereits im Ladestern befindlichen Werkstücke können auf diese Weise während des Beschickens der noch leeren Aufnahmen des Ladesterns aus dem Zwischenstern weiterhin durch eine unterhalb des Zwischensterns verlaufende Führung im Ladestern gehalten bleiben.

Die Drehsternelemente der Vorrichtungen zum Zuführen bzw. Wegführen von Werkstücken können bewegliche Finger aufweisen, um die Werkstücke in den Taschen zu halten. Diese können in Kombination mit Aussenführungen eingesetzt werden oder als Ersatz dafür. Die Bewegung der Finger ist steuerbar, so dass die Werkstücke an der gewünschten Drehposition aus den Aufnahmen, insbesondere aus den Taschen, freigegeben werden können. Bei einer Vorrichtung zum Zuführen von Werkstücken weisen insbesondere der Zwischenstern und der Ladestern bewegliche Finger auf. Dies ermöglicht eine gezielte Übergabe der im Zwischenstern zugeführten Werkstücke an den Ladestern sowie ein Halten der bereits vor dem Interaktionsbereich im Ladestern befindlichen Werkstücke während des Durchgangs durch den Interaktionsbereich. Die Geometrie des Interaktionsbereichs und die notwendigen mit den Drehsternelementen zusammenwirkenden Aussenführungen für die Werkstücke können somit vereinfacht werden. Insbesondere können bei der Vorrichtung zum Zuführen der Zwischenstern und der Ladestern ohne Weiteres in derselben horizontalen Ebene angeordnet sein.

Bei einer Vorrichtung zum Wegführen von Werkstücken weisen insbesondere der Entladestern und der Zwischenstern bewegliche Finger auf. Dies ermöglicht eine gezielte Übergabe jedes zweiten im Entladestern gehaltenen Werkstücks an den Zwischenstern, während die weiteren Werkstücke zunächst im Entladestern gehalten und erst im Interaktionsbereich mit dem Wegführstern freigegeben werden. Die Finger des Zwischensterns ermöglichen ein sicheres Ergreifen und Halten der vom Entladestern freigegebenen Werkstücke.

Anstelle von Fingern können der Zwischenstern der Vorrichtung zum Zuführen bzw. der Entladestern und der Zwischenstern der Vorrichtung zum Wegführen auch radial bewegliche Stössel aufweisen. Mit dessen Hilfe können die Werkstücke im Interaktionsbereich zwischen dem Zwischenstern und dem Ladestern bzw. zwischen dem Entladestern und dem Zwischenstern gesteuert in die Taschen des jeweils anderen Drehsternelements bewegt oder darin gehalten werden. Mit Stösseln ausgestattet sind sämtliche Taschen des Zwischensterns. Im Interaktionsbereich werden die Stössel derart bewegt, dass in den Taschen des Zwischensterns befindliche Werkstücke in die gegenüberliegenden Taschen des Ladesterns bewegt und anschliessend bis zum Ausgang des Interaktionsbereichs darin gehalten werden. Die Stössel der nicht mit Werkstücken beschickten Taschen des Zwischenrads werden im Ausgang des Interaktionsbereichs radial nach aussen gefahren, damit im Ladestern angeführte Werkstücke nicht fälschlicherweise im Zwischenstern weiter geführt werden.

Bei der Vorrichtung zum Wegführen sind diejenigen Taschen des Entladesterns mit Stösseln ausgestattet, welche Werkstücke aufnehmen die an den Zwischenstern übergeben werden sollen sowie diejenigen Taschen des Zwischensterns, welche keine Werkstücke aufnehmen sollen. Im Interaktionsbereich interagiert somit immer eine Tasche mit Stössel mit einer Tasche ohne Stössel. Die Stössel des Entladesterns sind generell radial nach innen zurückgezogen, damit die Aufnahme der Werkstücke in den Taschen ermöglicht ist. Am Einlauf des Interaktionsbereichs sind auch die Stössel des Zwischensterns radial nach innen zurückgezogen, um die Passage der im Entladestern angeförderten Werkstücke zu ermöglichen. Am auslaufenden Ende des Interaktionsbereichs werden die Stössel radial nach aussen bewegt, so dass das in der entsprechenden Tasche aufgenommene bzw. nicht aufzunehmende Werkstück in die Tasche des gegenüberliegenden Drehsternelements bewegt wird. Die Stössel können auf der Oberseite der Drehsternelemente oder auch unter deren Unterseite angeordnet sein.

Die Drehsternelemente mit Stösseln wirken bevorzugt mit Aussenführungen zusammen, wobei die Führungen derart ausgebildet und die Stössel derart gesteuert sind, dass die Werkstücke sicher und mit wenig Spiel zwischen dem jeweiligen Stössel und der Aussenführung gehalten sind. D. h. die Stössel beschreiben eine zur jeweiligen Aussenführung parallele Bahn.

Wie die Finger ermöglichen auch die Stössel eine einfachere Geometrie des Interaktionsbereichs und eine Vereinfachung der mit den Drehsternelementen zusammenwirkenden Aussenführungen. Bei der Vorrichtung zum Zuführen können der Zwischenstern und der Ladestern ohne Weiteres in derselben horizontalen Ebene angeordnet sein. Gegenüber der Lösung mit beweglichen Fingern ergibt sich eine geringere Verletzungsgefahr der Werkstücke, insbesondere zu bearbeitende Verschlüsse werden im Bereich der Verschlussöffnung weniger beansprucht. Für Werkstücke desselben horizontalen Querschnitts kann zudem immer derselbe Schieber eingesetzt werden, so dass weniger Austauschteile erforderlich sind und Einstellarbeiten entfallen können. Allerdings sind im Vergleich zur Lösung mit Fingern die Aussenführungen derart auszugestalten, dass die Werkstücke wo nötig durch diese am entsprechenden Drehsternelement gehalten bleiben, die Schieber können keine Haltefunktion erfüllen.

Die Bewegung der Finger beziehungsweise der Stössel wird mit Vorteil durch eine Kurvensteuerung kontrolliert. Diese umfasst insbesondere feststehende Kurven, welche den mit Fingern bzw. Stösseln versehenen Drehsternelementen zugeordnet sind und über welche die Finger bzw. Stössel während der Drehbewegung der Drehsternelemente mechanisch betätigt werden. Im Fall eines mit Stösseln ausgestatteten Zwischensterns der Vorrichtung zum Zuführen können zwei übereinanderliegende, fest angeordnete Kurven eingesetzt werden, wobei die Stössel für diejenigen Taschen, welche Werkstücke aufnehmen sollen sowie für diejenigen Taschen, welche leer bleiben, abwechselnd über die eine bzw. die andere Kurve gesteuert werden.

Die Drehbewegung des Drehtischs und des Ladesterns bzw. Entladesterns sowie weiterer Drehsternelemente ist vorzugsweise durch miteinander zusammenwirkende, drehfest mit Achsen der Drehsternelemente verbundene Zahnräder synchronisiert. Dies schafft auf einfache Weise eine sichere Synchronisation mit geringem Spiel, welche auch für hohe Produktionsgeschwindigkeiten geeignet ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht einer erfindungsgemässen Vorrichtung zur Zuführung von Kunststoffverschlüssen zu einem Drehtisch einer Bearbeitungseinrichtung;
- Fig. 2: eine Draufsicht auf die Oberseite der Vorrichtung;
- Fig. 3: eine Draufsicht auf die Unterseite der Vorrichtung;
- Fig. 4: eine Detailansicht des Übergabebereichs vom Zwischenstern zum Ladestern;
- Fig. 5: eine Aufsicht des Einlaufs anschliessend an den Übergabebereich vom Zwischenstern zum Ladestern;
- Fig. 6A-D: verschiedene Konfigurationen erfindungsgemässer Vorrichtungen zur Zuführung von Werkstücken;
- Fig. 7: eine Schrägansicht einer Anordnung mit einer erfindungsgemässen Vorrichtung zur Zuführung von Kunststoffverschlüssen zu einem Drehtisch sowie einer erfindungsgemässen Vorrichtung zum Wegtransport der Kunststoffverschlüsse;
- Fig. 8: einen Querschnitt durch den Entladestern und den Zwischenstern der erfindungsgemässen Vorrichtung zum Wegtransport;
- Fig. 9: eine Draufsicht auf die Oberseite der Anordnung;
- Fig. 10: eine Draufsicht auf die Unterseite der Anordnung; und
- Fig. 11: eine schematische Schrägansicht einer alternativen Ausführung des Entladesterns und des Zwischensterns der Vorrichtung zum Wegtransport.

Grundsätzlich sind in den Figuren gleiche Teile mit gleichen Bezugszeichen versehen.

### Wege zur Ausführung der Erfindung

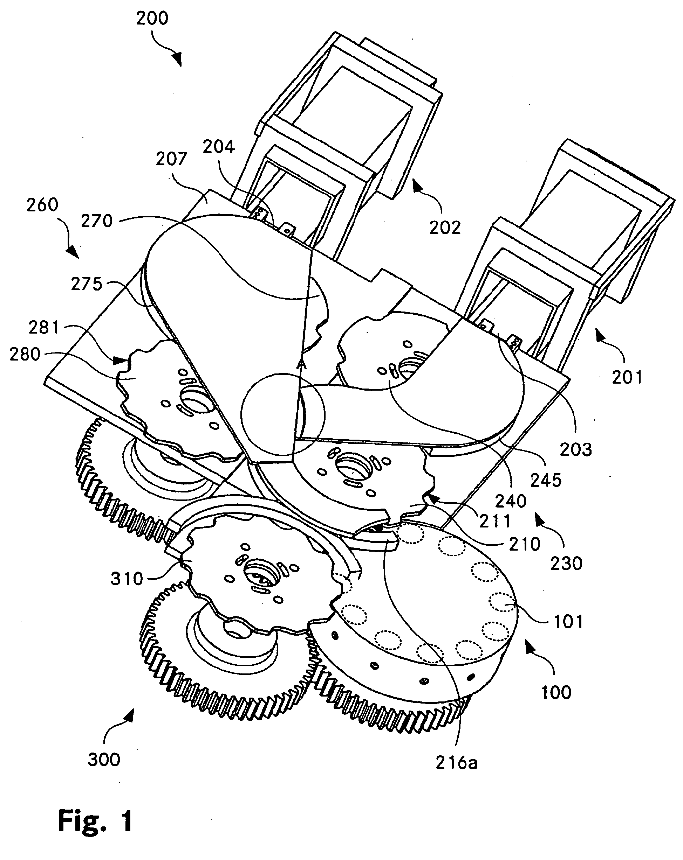

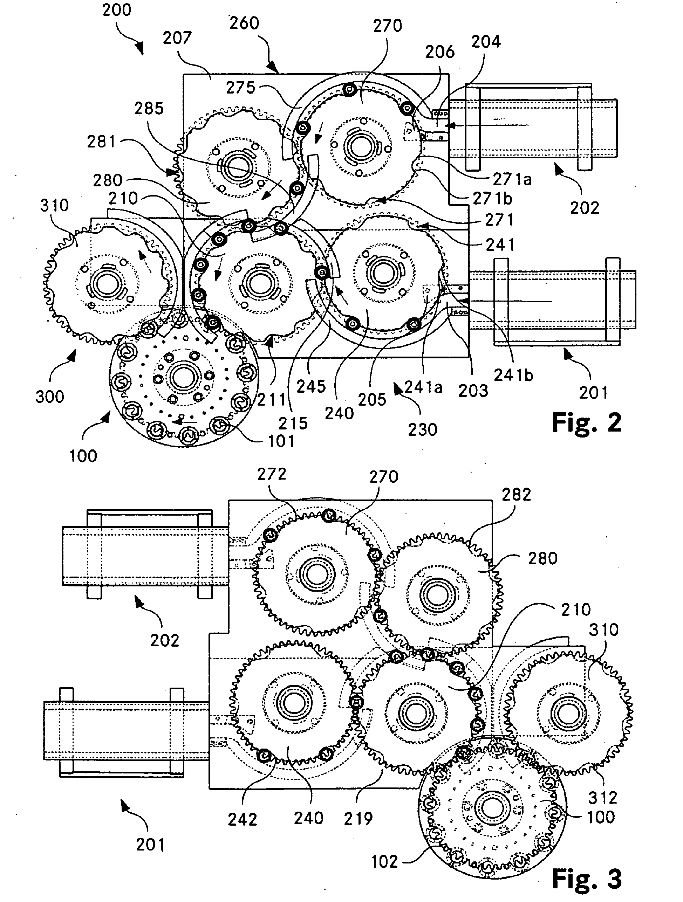

Die Figur 1 zeigt eine Schrägansicht einer erfindungsgemässen Vorrichtung zur Zuführung von Kunststoffverschlüssen zu einem Drehtisch einer Bearbeitungseinrichtung, die Figur 2 zeigt eine Draufsicht auf die Oberseite, die Figur 3 eine Draufsicht auf die Unterseite der Vorrichtung. Mit der dargestellten Vorrichtung lassen sich Kunststoffverschlüsse mit Durchmessern von ca. 25-50 mm und mit Höhen von ca. 10-25 mm zuführen, wobei zum Umrüsten auf unterschiedliche Durchmesser und gegebenenfalls unterschiedliche Höhen gewisse Teile der Vorrichtung in an sich bekannter Weise ausgetauscht werden können. Von der Bearbeitungseinrichtung ist nur der Drehtisch 100 dargestellt. Dieser umfasst umfangsseitig zwölf Aufnahmeplätze 101, welche je einen Verschluss aufnehmen können. Die Ausbildung der Aufnahmeplätze 101 hängt von der jeweiligen Bearbeitungseinrichtung ab und ist hier nicht näher ausgeführt. Die Verschlüsse werden zusammen mit der Drehbewegung des Drehtischs 100 durch eine oder mehrere Bearbeitungswerkzeuge der Bearbeitungseinrichtung geführt.

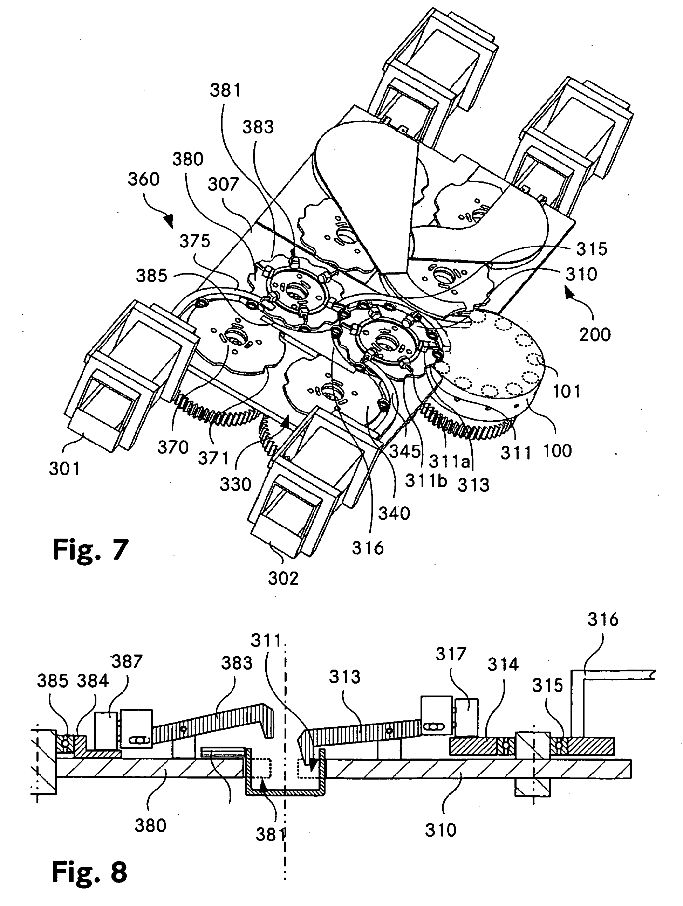

Die Zuführung der Verschlüsse auf den Drehtisch 100 erfolgt durch eine Zuführvorrichtung 200, nach erfolgter Bearbeitung werden die Verschlüsse durch eine Wegführvorrichtung 300 vom Drehtisch 100 entnommen und weitertransportiert. Von der Wegführvorrichtung 300 ist in den Figuren 1-3 nur jeweils ein Entladestern 310 dargestellt, eine zusammen mit dem Drehtisch einer Bearbeitungseinrichtung einsetzbare Wegführvorrichtung 300 ist weiter unten, im Zusammenhang mit den Figuren 7-10 im Detail beschrieben.

Die Kunststoffverschlüsse werden auf zwei Bahnen mittels an sich bekannter Jetstream-Förderer 201, 202 angefördert und in jeder Bahn jeweils hintereinander in einen Kanal 203, 204 eingebracht. Die Kanäle 203, 204 führen auf jeweils ein Drehsternelement einer Zuführeinrichtung hin, nämlich auf einen Zuführstern 240 einer ersten Zuführeinrichtung 230 bzw. auf einen Beschickungsstern 270 einer zweiten Zuführeinheit 260. Der jeweils vorderste zugeführte Verschluss stösst am Umfang des Zuführsterns 240 bzw. des Beschickungssterns 270 an. Der Zuführstern 240 und der Beschickungsstern 270 sind als um eine in einem Grundgestell 207 gelagerte, vertikale Achse drehbare plattenartige Elemente ausgeführt. Die Hauptflächen der Platten sind horizontal orientiert. Die Platten sind im Wesentlichen kreisförmig, weisen aber umfangsseitig jeweils sechs Taschen 241, 271 auf (siehe Figur 2). Diese sind als durchgängige, im Wesentlichen v-förmige Ausnehmungen ausgebildet, wobei der in Drehrichtung des jeweiligen Drehsternelements vordere Schenkel 241a, 271a an seinem umfangsseitigen Ausgangspunkt einen flachen Winkel mit der dortigen Tangente des plattenartigen Elements einschliesst. Der in Drehrichtung hintere Schenkel 241b, 271b schliesst an seinem wieder in den kreisförmigen Umfang übergehenden Ende einen etwas steileren Winkel mit der dortigen Tangente ein; im dargestellten Beispiel betragen die Winkel ca. 35° beim vorderen Schenkel 241a, 271a und ca. 65° beim hinteren Schenkel 241b, 271b. Der vordere Schenkel 241a, 271a bildet somit eine Einlaufschräge, der hintere Schenkel 241b, 271b einen Anschlag für den Verschluss.

Werden die Drehsternelemente um ihre vertikale Achse in Drehung versetzt, so werden die in den Kanälen 203, 204 zugeführten Verschlüsse von den Taschen 241, 271 mitgenommen, sobald diese die Mündung des jeweiligen Kanals 203, 204 passieren: Der vorderste Verschluss wird durch den Jetstream-Förderer 201, 202 und über die dahinter liegenden Verschlüsse nach vorne gedrückt und gelangt somit - unterstützt durch die Einlaufschräge des vorderen Schenkels 241a, 271a in die Tasche 241, 271. Sobald er den Taschengrund erreicht hat, wird er durch den Zuführstern 240 bzw. den Beschickungsstern 270 mitgenommen, wobei der Verschluss am hinteren Schenkel 241b, 271b anliegt. Die Tiefe der Taschen 241, 271 ist so gewählt, dass der Verschluss nur etwa zu 2/5 seines Durchmessers in der Tasche 241, 271 gehalten ist, der restliche Teil des Verschlusses ragt über den Umfang des plattenförmigen Elements hinaus.

Die Zuführung des Verschlusses in die jeweilige Tasche 241, 271 wird unterstützt durch ein Umlenkelement 205, 206, welches die in Drehrichtung des Drehsternelements hintere Wandung des Kanals 203, 204 bildet und welches an der Mündung des Kanals leicht in Drehrichtung nach vorne abgebogen ist. Das vordere Ende des Umlenkelements 205, 206 ist unter das plattenartige Element des Zuführsterns 240 bzw. des Beschickungssterns 270 geführt, so dass der Verschluss nahtlos aus dem Kanal 203, 204 in die Tasche 241, 271 übergeben werden kann. Da beide Drehsternelemente jeweils sechs - gleichmässig entlang des Umfangs angeordnete - Taschen 241, 271 aufweisen, wird nach einer jeweiligen Rotation von 60° ein weiterer Verschluss von ihnen aufgenommen.

Damit die in den Taschen 241, 271 aufgenommenen Verschlüsse während der Drehbewegung des Zuführsterns 240 bzw. des Beschickungssterns 270 in den Taschen 241, 271 gehalten bleiben, sind umfangsseitig bogenförmige Führungen 245, 275 radial beabstandet zum jeweiligen Drehsternelement am Grundgestell 207 fest angeordnet. Der radiale Abstand der Führungen 245, 275 ist auf den Durchmesser der Verschlüsse und die Tiefe der Taschen 241, 271 derart abgestimmt, dass die Verschlüsse während der Drehbewegung der Drehsternelemente mit nur geringem Spiel in den Taschen 241, 271 gehalten bleiben und somit genau der Bewegung des Umfangs der Drehsternelemente folgen.

In der in den Figuren 1-3 dargestellten Konfiguration rotieren der Zuführstern 240 und der Beschickungsstern 270 gegenläufig, von oben gesehen rotiert der Zuführstern 240 im Uhrzeigersinn, während der Beschickungsstern 270 gegen den Uhrzeigersinn dreht. Entsprechend schliessen sich die Führungen 245, 275 im Uhrzeigersinn bzw. entgegen den Uhrzeigersinn an die Mündungen der Kanäle 203, 204 an. Die Führung 245 des Zuführsterns 240 beschreibt ungefähr einen Kreisbogen von 145°, sorgt also dafür, dass die Verschlüsse über ca. 145° mit dem Zuführstern 240 transportiert werden. Die Führung 275 des Beschickungssterns 270 beschreibt ungefähr einen Kreisbogen von 170°, die vom Beschickungsstern 270 aufgenommenen Verschlüsse werden also über diesen Winkel von ihm mitgenommen.

Die zweite Zuführeinrichtung 260 umfasst weiter einen Zwischenstern 280, welcher ebenfalls um eine im Grundgestell 207 gelagerte vertikale Achse drehbar ist. Der Zwischenstern 280 ist grundsätzlich ausgebildet wie der Beschickungsstern 270, weist aber zwölf anstelle von sechs Taschen 281 auf und rotiert gegenläufig zum Beschickungsstern 270. Der Zwischenstern 280 und der Beschickungsstern 270 sind derart zueinander angeordnet, dass in einem Interaktionsbereich im Beschickungsstern 270 aufgenommene Verschlüsse an den Zwischenstern 280 übergeben werden können. Zu diesem Zweck sind die beiden Drehsternelemente derart beabstandet, dass in einer Drehposition der Drehsternelemente, in welcher sich im Interaktionsbereich zwei Taschen 271, 281 gegenüberstehen, ein Verschluss temporär durch beide Taschen 271, 281 aufgenommen sein kann. Der Abstand der kreissegmentartigen Ränder der beiden Drehsternelemente ist somit bei der vorliegend dargestellten Ausführung etwas mehr als 1/5 des Durchmessers eines Verschlusses.

Die Übergabe der Verschlüsse vom Beschickungsstern 270 an den Zwischenstern 280 wird durch eine Führung 285 des Zwischensterns 280 bewirkt. Die Führung 285 ist grundsätzlich ausgebildet wie die weiter oben beschriebene Führung 275 des Beschickungssterns, sie beschreibt einen Kreisbogen von ca. 90°. Im Interaktionsbereich zwischen dem Beschickungsstern 270 und dem Zwischenstern 280 ist sie über den Beschickungsstern 270 geführt und verhindert somit, dass der Verschluss im Anschluss an den Interaktionsbereich weiter mit dem Beschickungsstern 270 mitbewegt wird. Stattdessen wird er zwischen der Tasche 281 und der Führung 285 des Zwischensterns geführt.

Der Durchmesser des Zwischensterns 280 ist gleich dem Durchmesser des Beschickungssterns 270, die beiden Drehsternelemente werden zudem mit derselben Winkelgeschwindigkeit bewegt. Wegen der unterschiedlichen Taschenzahl wird somit vom Beschickungsstern 270 nur jede zweite Tasche 281 des Zwischensterns 280 mit einem Verschluss beschickt.

Der Zuführstern 240 der ersten Zuführeinrichtung 230 wirkt mit einem Ladestern 210 zusammen. Dieser ist wie die anderen Drehsternelemente um eine im Grundgestell 207 gelagerte vertikale Achse drehbar. Der Ladestern 210 ist ausgebildet wie der Zwischenstern 280 mit zwölf umfangsseitigen Taschen 211. Er rotiert gegensinnig zum Zuführstern 240 und somit auch zum Zwischenstern 280. Der Ladestern 210 und der Zuführstern 240 sind derart zueinander angeordnet, dass in einem Interaktionsbereich im Zuführstern 240 aufgenommene Verschlüsse an den Ladestern 280 übergeben werden können. Zu diesem Zweck sind die beiden Drehsternelemente - ähnlich wie der Zwischenstern 280 und der Beschickungsstern 270 - derart beabstandet, dass in einer Drehposition der Drehsternelemente, in welcher sich im Interaktionsbereich zwei Taschen 211, 241 gegenüberstehen, ein Verschluss temporär durch beide Taschen 211, 241 aufgenommen sein kann. Der Abstand der kreissegmentartigen Ränder der beiden Drehsternelemente ist somit bei der vorliegend dargestellten Ausführung wiederum etwas mehr als 1/5 des Durchmessers eines Verschlusses.

Die Übergabe der Verschlüsse vom Zuführstern 240 an den Ladestern 210 wird durch eine Führung 215 des Ladesterns 210 bewirkt. Die Führung 215 ist grundsätzlich ausgebildet wie die weiter oben beschriebenen Führungen, sie beschreibt einen Kreisbogen von ca. 45°. Im Interaktionsbereich zwischen dem Zuführstern 240 und dem Ladestern 210 ist sie über den Zuführstern 240 geführt und verhindert somit, dass der Verschluss im Anschluss an den Interaktionsbereich weiter mit dem Zuführstern 240 mitbewegt wird. Stattdessen wird er zwischen der Tasche 211 und der Führung 215 des Ladesterns geführt.

Der Durchmesser des Ladesterns 210 ist gleich dem Durchmesser des Zuführsterns 240, die beiden Drehsternelemente werden zudem mit derselben Winkelgeschwindigkeit bewegt. Wegen der unterschiedlichen Taschenzahl wird somit vom Zuführstern 240 nur jede zweite Tasche 211 des Ladesterns 210 mit einem Verschluss beschickt.

Der Ladestern 210 ist bezüglich des Zwischensterns 280 der zweiten Zuführeinrichtung 260 derart angeordnet, dass auch zwischen diesen Drehsternelementen ein Interaktionsbereich gebildet wird, in welchem Verschlüsse vom Zwischenstern 280 auf den Ladestern 210 übergeben werden können. Die Geometrie entspricht derjenigen bei den Interaktionsbereichen zwischen dem Beschickungsstern 270 und dem Zwischenstern 280 bzw. dem Zuführstern 240 und dem Ladestern 210. Der Interaktionsbereich des Zwischensterns 280 und des Ladesterns 210 liegt in Drehrichtung des Ladesterns 210 vor dem Interaktionsbereich mit dem Zuführstern 240, d. h. jede zweite Tasche 211, welche durch die Drehbewegung des Ladesterns 210 in diesen Interaktionsbereich geführt wird, ist bereits von der ersten Zuführeinrichtung 230 mit einem Verschluss beschickt worden.

Diese im Ladestern 210 aufgenommenen Verschlüsse sollen unbeeinflusst den Interaktionsbereich mit dem Zwischenstern 280 passieren und weiter mit dem Ladestern 210 transportiert werden. Gleichzeitig werden in die verbliebenen, noch unbeschickten Taschen 211 Verschlüsse vom Zwischenstern 280 der zweiten Zuführeinrichtung 270 eingebracht. Zu diesem Zweck ist die gesamte zweite Zuführeinrichtung 270 auf einem um ca. 4 mm höheren Niveau angeordnet als die erste Zuführeinrichtung 230 und der Ladestern 210, d. h. die Verschlüsse gleiten in dieser Zuführeinrichtung 270 auf einer um ca. 4 mm höheren Ebene. Die Verschlüsse fallen bei der Übergabe vom Zwischenstern 280 in die Taschen 211 des Ladesterns 210 auf das tiefere Niveau des Ladesterns 210.

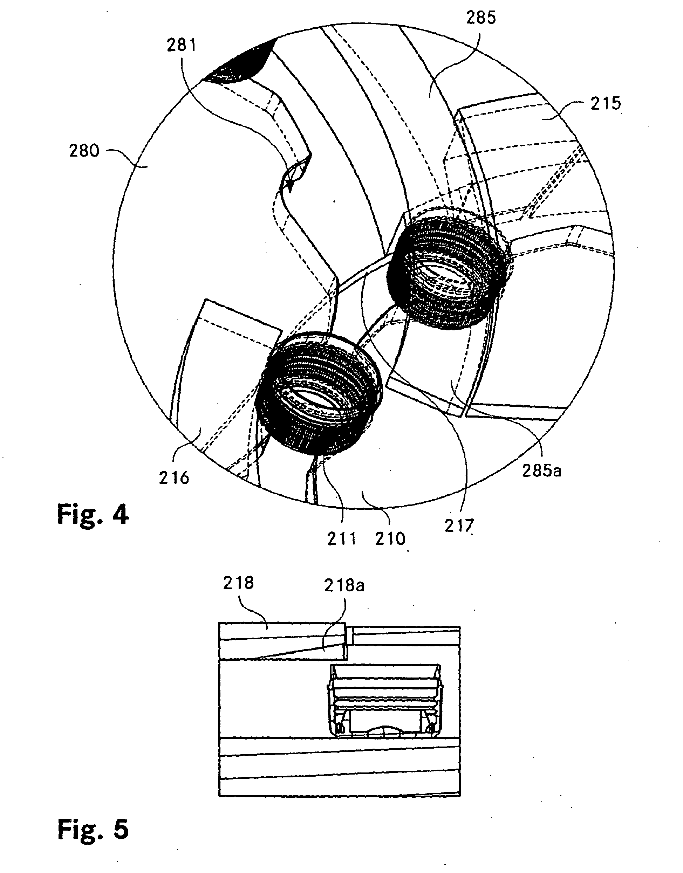

Die Figur 4 zeigt eine Detailansicht des Übergabebereichs vom Zwischenstern 280 zum Ladestern 210. Am Übergang von der höheren Ebene der zweiten Zuführeinrichtung 270 zur Ebene, auf welcher die im Ladestern 210 aufgenommenen Verschlüsse geführt sind, ist ein Absatz 217 ausgebildet. Dieser bildet die kreisbogenförmige Fortsetzung der Führung 215 und führt die bereits von der ersten Zuführeinrichtung 230 in den Ladestern 210 abgegebenen Verschlüsse beim Durchgang durch den Interaktionsbereich mit dem Zwischenstern 280. Diese Verschlüsse können den Interaktionsbereich ungehindert durchlaufen, weil bei ihrem Durchgang gleichzeitig eine leere Tasche 281 des Zwischensterns 280 den Interaktionsbereich passiert und somit den Weg für den bereits im Ladestern 210 aufgenommenen Verschluss freigibt.

Die in Taschen 281 des Zwischensterns 280 aufgenommenen Verschlüsse werden zunächst entlang der dem Zwischenstern zugeordneten Führung 285 zugeführt, fallen dann über den Absatz 217 und gelangen in die noch unbeschickten Taschen 211 des Ladesterns 210. Diese Bewegung wird zunächst durch die Führung 285 geführt, diese umfasst deshalb einen Abschnitt 285a welcher über die Bahn der bereits im Ladestern 210 befindlichen Verschlüsse geführt wird. Sobald der Verschluss in der Tasche 211 aufgenommen ist, wird er - wie auch die bereits vorher im Ladestern 210 befindlichen Verschlüsse - durch die Führung 216 im Ladestern 210 gehalten. Die Führung 216 ist wiederum grundsätzlich ausgebildet wie die weiter oben beschriebenen Führungen und beschreibt einen Kreisbogen von ca. 135°.

Zur Beruhigung der auf das tiefere Niveau fallenden Verschlüsse der zweiten Zuführeinrichtung ist im Interaktionsbereich eine Höhenführung 218 mit einer Einlaufschräge 218a angeordnet (siehe Figur 5).

Die Bewegung der verschiedenen Drehsternelemente ist so synchronisiert, dass sich in den Interaktionsbereichen jeweils Taschen der beiden Drehsternelemente direkt gegenüberstehen. Diese Synchronisation erfolgt mittels Zahnräder, welche koaxial und drehfest mit den jeweiligen Drehsternelementen verbunden sind, wobei das an den Ladestern 210 gekoppelte Zahnrad 219 mit dem Zahnrad 102 des Drehtischs 100 kämmt, das Zahnrad 282 des Zwischensterns 280 und das Zahnrad 242 des Zuführsterns 240 kämmen ebenfalls mit dem Zahnrad des Ladesterns 210. Das Zahnrad 272 des Beschickungssterns 270 schliesslich kämmt mit dem Zahnrad 282 des Zwischensterns 280. Auch der Entladestern 310 ist über ein Zahnrad 312 mit dem Drehtisch 100 gekoppelt.

Die Zuführeinrichtungen 230, 260 sind so eingestellt, dass nach Passieren des Interaktionsbereichs mit dem Zwischenstern 280 sämtliche entsprechende Taschen 211 des Ladesterns 210 mit einem Verschluss beschickt sind. Die Verschlüsse werden dann zusammen mit dem Ladestern 210, geführt durch die Führung 216 bis über den Drehtisch 100 geführt und können dann von den Aufnahmen 101 des Drehtischs aufgenommen werden. Die Ebene des Drehtischs 100 entspricht dabei der Führungsebene für die Verschlüsse im Bereich des Ladesterns 210. Der über den Drehtisch 100 ragende Abschnitt 216a der Führung 216 weist an seiner Unterseite eine Ausnehmung auf, durch welche Halteelemente des Drehtischs 100 passieren können.

Nach der Bearbeitung in der Bearbeitungsstation während der umlaufenden Bewegung des Drehtischs werden die Verschlüsse durch einen Entladestern 310 der Wegführvorrichtung 300 wieder von den Aufnahmeplätzen 101 entnommen und weitertransportiert, z. B. zu einer nachfolgenden Bearbeitungsstation, einem Sammelbehälter oder einer weiteren Fördervorrichtung.

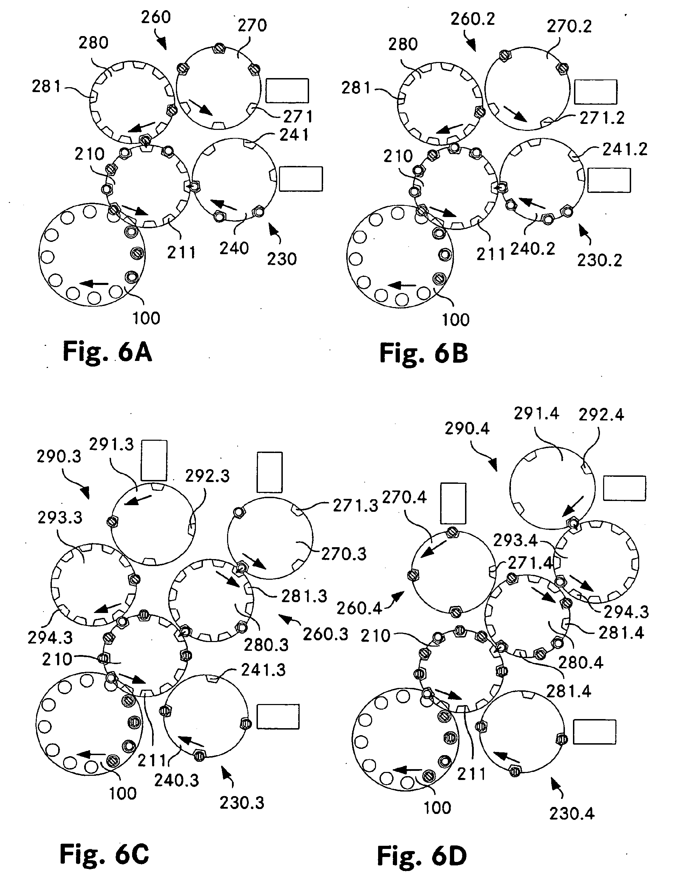

Die im Zusammenhang mit den Figuren 1-5 dargestellte Vorrichtung lässt mit verschiedenen Konfigurationen ausführen. In den Figuren 6A-D sind als Beispiele verschiedene Konfigurationen schematisch dargestellt. Der Übersichtlichkeit halber sind Elemente wie Führungen, Antriebselemente etc. weggelassen. Die Figur 6A gibt die bereits im Vorstehenden beschriebene Konfiguration wieder: Die Verschlüsse werden mittels zweier Zuführeinrichtungen 230, 260 zweibahnig zugeführt. Die erste Zuführeinrichtung 230 umfasst einen Zuführstern 240, welcher Verschlüsse direkt dem Ladestern 210 übergeben kann. Die zweite Zuführeinrichtung umfasst einen Beschickungsstern 270, von welchem die Verschlüsse über einen Zwischenstern 280 in den Ladestern 210 gelangen. Alle Drehsternelemente haben denselben Durchmesser und werden mit derselben Winkelgeschwindigkeit bewegt.

Der Zuführstern 240 der ersten Zuführeinrichtung 230 liegt in Drehrichtung des Ladesterns 210 hinter dem Zwischenstern 280 der zweiten Zuführeinrichtung 260. Die Verschlüsse aus dem Zuführstern gelangen somit in den Ladestern 210, bevor der entsprechende Abschnitt des Ladesterns 210 mit dem Zwischenstern 280 zusammenwirkt. Der Zuführstern 240 und der Beschickungsstern 270 umfassen je sechs Taschen 241, 271 und beschicken somit jede zweite der zwölf Taschen 211, 281 des Ladesterns 210 bzw. des Zwischensterns 280. Der Zwischenstern 280 ist so mit dem Ladestern 210 synchronisiert, dass die aufgenommenen Verschlüsse in die nach dem Durchgang durch den Interaktionsbereich mit dem Zuführstern 240 leer verbliebenen Taschen abgegeben werden können. Dem Drehtisch 100 wird jeweils alternierend ein Verschluss von der ersten Bahn (erste Zuführeinrichtung 230) und von der zweiten Bahn (zweite Zuführeinrichtung 260) zugeführt.

Die Figur 6B zeigt eine Variation der Konfiguration der Figur 6A, die sich von der vorstehend beschriebenen Konfiguration lediglich dadurch unterscheidet, dass der Zuführstern 240.2 acht anstelle von sechs Taschen 241.2 aufweist, welche die Positionen 1, 2, 4, 5, 7, 8, 10, 11 einer gleichmässigen Zwölferteilung besetzen. Der Beschickungsstern 270.2 weist anstelle von sechs nur vier Taschen 271.2 auf, welche gleichmässig entlang des Umfangs verteilt sind. Der Zuführstern 240.2 wird somit jeweils zwei nachfolgende Taschen 211 des Ladesterns 210 mit einem Verschluss beschicken und anschliessend eine Tasche 211 leer lassen. Vom Zwischenstern 280 ist jede dritte Tasche 281 beschickt. Der Zwischenstern 280 ist so mit dem Ladestern 210 synchronisiert, dass die aufgenommenen Verschlüsse in die nach dem Durchgang durch den Interaktionsbereich mit dem Zuführstern 240.2 leer verbliebenen Taschen abgegeben werden können. Dem Drehtisch 100 werden somit alternierend zwei Verschlüsse aus der ersten Zuführeinrichtung 230.2 und ein Verschluss aus der zweiten Zuführeinrichtung 260.2 zugeführt.

Die Figuren 6C und 6D zeigen Beispiele für dreibahnige Zuführungen. Die in der Figur 6C dargestellte Vorrichtung umfasst eine erste Zuführeinrichtung 230.3 mit einem Zuführstern 240.3 mit vier gleichmässig entlang des Umfangs verteilten Taschen 241.3. Die in diesen aufgenommenen Verschlüsse können direkt in den Ladestern 210 abgegeben werden. Die zweite Zuführeinrichtung 260.3 umfasst einen Beschickungsstern 270.3 mit vier gleichmässig entlang des Umfangs verteilten Taschen 271.3. Dieser wirkt zusammen mit einem Zwischenstern 280.3 mit zwölf Taschen 281.3, aus welchen aufgenommene Verschlüsse in den Ladestern 210 abgegeben werden können. Der Zwischenstern 280.3 ist in Drehrichtung des Ladesterns 210 vor dem Zuführstern 240.3 der ersten Zuführeinrichtung 230.3 angeordnet.

Die Vorrichtung umfasst weiter eine dritte Zuführeinrichtung 290.3 mit einem Beschickungsstern 291.3 mit vier Taschen 292.3 sowie einen nachgeordneten Zwischenstern 293.3 mit zwölf Taschen 294.3. In Letzterem aufgenommene Verschlüsse können an den Ladestern 210 abgegeben werden, wobei der Interaktionsbereich zwischen dem Zwischenstern 293.3 der dritten Zuführeinrichtung 290.3 wiederum in Drehrichtung vor dem Interaktionsbereich mit dem Zwischenstern 280.3 der zweiten Zuführeinrichtung 260.3 liegt. Der Ladestern 210 wird somit sukzessive mit Verschlüssen aus der ersten, der zweiten und der dritten Zuführeinrichtung 230.3, 260.3, 290.3 beschickt, entsprechend empfängt der Drehtisch 100 jeweils zyklisch hintereinander Verschlüsse aus der ersten, zweiten und dritten Bahn.

Die Figur 6D zeigt eine alternative Realisierung einer dreibahnigen Zuführung. Die erste Zuführeinrichtung 230.4 ist identisch mit der in der Figur 6C gezeigten, sie wirkt direkt mit dem Ladestern 210 mit zwölf Taschen 211 zusammen. Für die zweite und die dritte Zuführeinrichtung 260.4, 290.4 ist ein gemeinsamer Zwischenstern 280.4 mit ebenfalls zwölf Taschen 281.4 vorgesehen, welcher Verschlüsse aus beiden Zuführeinrichtungen 260.4, 290.4 aufnimmt und mit dem Ladestern 210 zusammenwirkt. Die zweite Zuführeinrichtung umfasst einen Beschickungsstern 270.4 mit vier Taschen 271.4, der aufgenommene Verschlüsse an den Zwischenstern 280.4 weitergeben kann. Die dritte Zuführeinrichtung 290.4 umfasst einen Beschickungsstern 291.4 mit vier Taschen 292.4 und wirkt über einen eigenen Zwischenstern 293.4 mit zwölf Taschen 294.4 mit dem gemeinsamen Zwischenstern 280.4 zusammen. Die resultierende Beschickung des Drehtischs 100 entspricht derjenigen bei der Ausführung gemäss Figur 6C.

Es sind viele weitere Konfigurationen auch mit mehr als drei Bahnen und mit anderen Zuführverhältnissen von den einzelnen Bahnen denkbar. Auf den einzelnen Bahnen können verschiedenartige oder gleiche Werkstücke angefördert werden. Falls, wie in den dargestellten Beispielen, die Verschlüsse radial über den Umfang der Drehsternelemente hinausragen, ist darauf zu achten, dass bei den Interaktionsbereichen zwischen benachbarten Drehsternelementen die Passage für bereits im empfangenden Drehstern aufgenommene Verschlüsse freigegeben wird, insbesondere durch leere Taschen im abgebenden Drehsternelement.

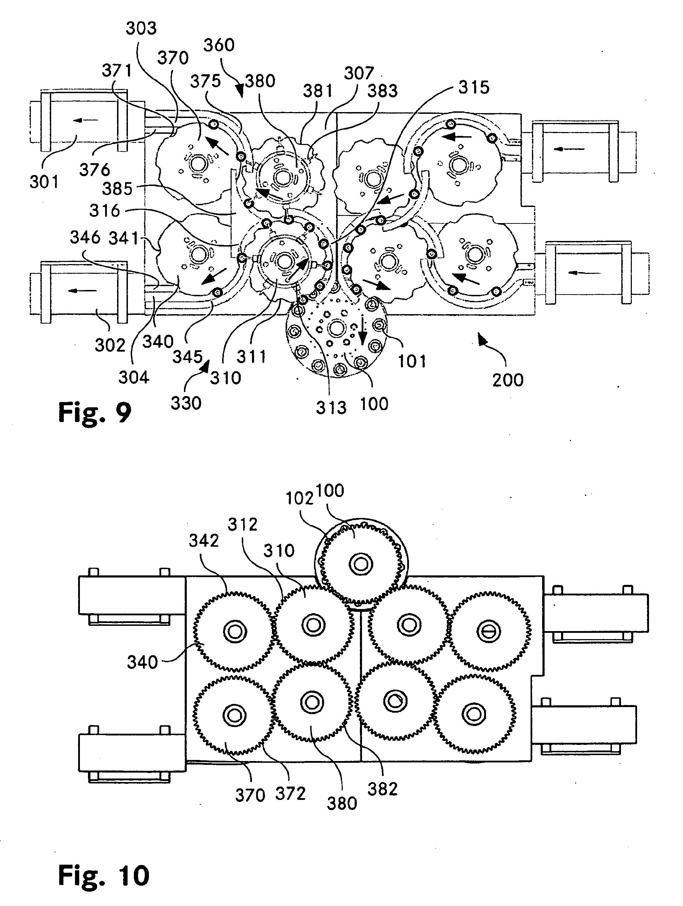

Die Figur 7 zeigt eine Schrägansicht einer Anordnung mit einer erfindungsgemässen Vorrichtung zur Zuführung von Kunststoffverschlüssen zu einem Drehtisch sowie einer erfindungsgemässen Vorrichtung zum Wegtransport der Kunststoffverschlüsse, in den Figuren 9 und 10 sind eine Draufsicht auf die Oberseite bzw. eine Draufsicht auf die Unterseite der Anordnung dargestellt. Die Vorrichtung 200 zur Zuführung der Verschlüsse entspricht der im Zusammenhang mit den Figuren 1-5 ausführlich beschriebenen Vorrichtung mit zweibahniger Zuführung. Auf diese wird somit im Folgenden nicht weiter eingegangen. Dargestellt ist auch wiederum der Drehtisch 100 einer Bearbeitungseinrichtung mit Aufnahmen 101 zur Aufnahme von Verschlüssen.

Die Vorrichtung 300 zum Wegtransport der Verschlüsse umfasst einen Entladestern 310, welcher als um eine in einem Grundgestell 307 gelagerte, vertikale Achse drehbares plattenartiges Element ausgeführt ist. Die Hauptfläche der Platte ist horizontal orientiert. Die Platte ist im Wesentlichen kreisförmig, weist aber umfangsseitig zwölf gleichmässig angeordnete Taschen 311 auf.

Die Taschen 311 des Entladesterns 310 sowie der weiteren im Folgenden beschriebenen Drehsternelemente der Vorrichtung 300 zum Wegtransport sind (wie die Taschen der Vorrichtung 200 zur Zuführung) als durchgängige, im Wesentlichen v-förmige Ausnehmungen ausgebildet, wobei der in Drehrichtung des jeweiligen Drehsternelements vordere Schenkel 311a an seinem umfangsseitigen Ausgangspunkt einen flachen Winkel mit der dortigen Tangente des plattenartigen Elements einschliesst. Der in Drehrichtung hintere Schenkel 311 b schliesst an seinem wieder in den kreisförmigen Umfang übergehenden Ende einen etwas steileren Winkel mit der dortigen Tangente ein; im dargestellten Beispiel betragen die Winkel ca. 35° beim vorderen Schenkel 311a und ca. 65° beim hinteren Schenkel 311b. Der vordere Schenkel 311a bildet somit eine Einlaufschräge, der hintere Schenkel 311b einen Anschlag für den Verschluss. Die Tiefe der Taschen 311 ist so gewählt, dass der Verschluss nur etwa zu 2/5 seines Durchmessers in der Tasche 311 gehalten ist, der restliche Teil des Verschlusses ragt über den Umfang des plattenförmigen Elements hinaus.

Jede zweite Tasche 311 des Entladesterns 310 ist mit einem beweglichen Finger 313 versehen, durch welchen der in den Taschen 311 aufgenommene Verschluss unabhängig von einer Aussenführung während der Drehbewegung des Entladesterns 310 in der Tasche 311 gehalten werden kann. Die Finger 313 und ihre Funktionsweise sind weiter unten, im Zusammenhang mit der Figur 8, näher beschrieben.

Die Taschen 311 können Verschlüsse vom Drehtisch 100 aufnehmen. Zu diesem Zweck ist der Entladestern 310 teilweise über den Drehtisch 100 geführt. Die im Drehtisch 100 aufgenommenen Verschlüsse werden beim Passieren des Übergabebereichs nacheinander von aufeinander folgenden Taschen 311 des Entladesterns 310 aufgenommen. Damit die in den Taschen 311 aufgenommenen Verschlüsse während der Drehbewegung des Entladesterns 310 in den Taschen 311 gehalten bleiben, ist umfangsseitig eine bogenförmige Führung 315 radial beabstandet zum Entladestern 310 am Grundgestell 307 fest angeordnet. Der radiale Abstand der Führung 315 ist auf den Durchmesser der Verschlüsse und die Tiefe der Taschen 311 derart abgestimmt, dass die Verschlüsse während der Drehbewegung der Drehsternelemente mit nur geringem Spiel in den Taschen 311 gehalten bleiben und somit genau der Bewegung des Umfangs des Entladesterns 310 folgen. Der über den Drehtisch 100 ragende Abschnitt 315a der Führung 315 weist an seiner Unterseite eine Ausnehmung auf, durch welche Halteelemente des Drehtischs 100 passieren können.

In der in den Figuren 7, 9 und 10 dargestellten Konfiguration rotiert der Entladestern 310 von oben gesehen im Gegenuhrzeigersinn. Entsprechend schliesst sich die Führung 315, im Gegenuhrzeigersinn an die Übernahmestelle mit dem Drehtisch 100 an. Die Führung 315 des Entladesterns 310 beschreibt ungefähr einen Kreisbogen von 150°, sorgt also dafür, dass die Verschlüsse über ca. 150° mit dem Entladestern 310 transportiert werden.

An den Entladestern 310 schliessen sich zwei Wegführeinrichtungen 330, 360 an, welche Verschlüsse vom Entladestern 310 aufnehmen und weitertransportieren. Die erste Wegführeinrichtung 360 umfasst einen Zwischenstern 380 sowie einen dem Zwischenstern 380 nachgeordneten Aufnahmestern 370, wobei beide Drehsternelemente um eine im Grundgestell 307 gelagerte vertikale Achse drehbar sind. Der Zwischenstern 380 ist grundsätzlich ausgebildet wie der Entladestern 310 und umfasst ebenfalls zwölf Taschen 381 sowie sechs bewegliche Finger 383, wobei mit jeder zweiten Tasche 381 ein Finger 383 zusammenwirkt. Der Aufnahmestern 370 weist nur sechs (ansonsten aber gleich ausgebildete) Taschen 371 auf, es sind keine Finger vorhanden. Der Zwischenstern 380 rotiert gegenläufig zum Entladestern 310, und der Aufnahmestern 370 wiederum gegenläufig zum Zwischenstern 380. Die Durchmesser des Entladesterns 310, des Aufnahmesterns 370 und des Zwischensterns 380 sind gleich. Die drei Drehsternelemente werden zudem mit derselben Winkelgeschwindigkeit bewegt.

Der Entladestern 310 und der Zwischenstern 380 bzw. der Zwischenstern 380 und der Aufnahmestern 370 sind jeweils derart zueinander angeordnet, dass in einem Interaktionsbereich im ersten Drehsternelement aufgenommene Verschlüsse an das zweite Drehsternelement übergeben werden können. Zu diesem Zweck sind die beiden Drehsternelemente derart beabstandet, dass in einer Drehposition der Drehsternelemente, in welcher sich im Interaktionsbereich zwei Taschen 311, 381 bzw. 381, 371 gegenüberstehen, ein Verschluss temporär durch beide Taschen 311, 381 bzw. 381, 371 aufgenommen sein kann. Der Abstand der kreissegmentartigen Ränder der beiden Drehsternelemente ist somit bei der vorliegend dargestellten Ausführung etwas mehr als 1/5 des Durchmessers eines Verschlusses.

Die Übergabe der Verschlüsse vom Entladestern 310 an den Zwischenstern 380 wird durch die Finger 383 des Zwischensterns 380 bewirkt. Verschlüsse, die in nicht mit Fingern 313 ausgestatteten Taschen 31 des Entladesterns 310 aufgenommen sind, werden beim Durchgang des Interaktionsbereichs von einem Finger 383 des Zwischensterns 380 erfasst und in der entsprechenden Tasche 381 des Zwischensterns 380 gehalten und somit mit diesem weitertransportiert. Die in mit Fingern 313 versehenen Taschen 311 des Entladesterns 310 werden während des Durchgangs des Interaktionsbereichs von den Fingern 313 in den Taschen 311 gehalten. Es wird somit im Interaktionsbereich jeder zweite Verschluss vom Entladestern 310 an den Zwischenstern 380 übergeben, während die weiteren Verschlüsse zunächst im Entladestern 310 verbleiben. Der weitere Transport der vom Zwischenstern 380 aufgenommenen bzw. im Entladestern 310 verbliebenen Verschlüsse wird durch Führungen 385, 316 unterstützt, wobei die Führungen grundsätzlich ausgebildet sind wie die weiter oben beschriebene Führung 315 des Entladesterns 310. Die Führung 385 des Zwischensterns 380 beschreibt einen Kreisbogen von ca. 80°, die Führung 316 des Entladesterns 310 einen Kreisbogen von ca. 65°.

Am Ende der Führung 385 des Zwischensterns 380 liegt der weitere Interaktionsbereich mit dem Aufnahmestern 370. Der Aufnahmestern 370 ist mit dem Zwischenstern derart synchronisiert, dass in nachfolgende Taschen 371 vom Zwischenstern 380 angeförderte Verschlüsse aufgenommen werden können. Dies wird durch eine Führung 375 bewirkt, welche im Interaktionsbereich zwischen dem Zwischenstern 380 und dem Aufnahmestern 370 über den Zwischenstern 380 geführt ist und somit verhindert, dass der Verschluss im Anschluss an den Interaktionsbereich weiter mit dem Zwischenstern 380 mitbewegt wird.

Die Führung 375 beschreibt einen Kreisbogen von ca. 90° und verläuft dann geradlinig weiter. Im geradlinigen Bereich ist zwischen der Führung 375 und einer gegenüberliegenden Führung 376 ein Kanal 303 ausgebildet, durch welchen die im Aufnahmestern 370 angeförderten Verschlüsse einem Jetstream-Förderer 301 übergeben werden. Der Jetstream-Förderer 301 führt die Verschlüsse einer nachfolgenden Station, beispielsweise einer Bearbeitungs- oder Verpackungseinrichtung zu.

Die zweite Wegführeinrichtung 330 wird durch einen Wegführstern 340 gebildet, welcher wiederum um eine im Grundgestell 307 gelagerte vertikale Achse drehbar ist. Der Wegführstern ist gleich ausgebildet wie der vorstehend beschriebene Aufnahmestern 370 und rotiert mit derselben Winkelgeschwindigkeit aber gegenläufig zum Entladestern 310.

Am Ende der Führung 316 des Entladesterns 310 liegt der Interaktionsbereich mit dem Wegführstern 340. Der Wegführstern 340 ist mit dem Entladestern 310 derart synchronisiert, dass die in Taschen 31 des Entladesterns 310 verbliebenen Verschlüsse in nachfolgende Taschen 341 des Wegführsterns 340 aufgenommen werden können. Diese Aufnahme wird durch eine Führung 345 bewirkt, welche im Interaktionsbereich zwischen dem Entladestern 310 und dem Wegführstern 340 über den Entladestern 310 geführt ist und somit verhindert, dass der Verschluss im Anschluss an den Interaktionsbereich weiter mit dem Entladestern 310 mitbewegt wird. Die Führung 345 beschreibt einen Kreisbogen von ca. 90° und verläuft dann geradlinig weiter. Im geradlinigen Bereich ist zwischen der Führung 345 und einer gegenüberliegenden Führung 346 ein Kanal 304 ausgebildet, durch welchen die im Wegführstern 340 angeförderten Verschlüsse einem Jetstream-Förderer 302 übergeben werden. Der Jetstream-Förderer 302 führt die Verschlüsse einer nachfolgenden Station, beispielsweise einer Bearbeitungs- oder Verpackungseinrichtung zu.

Die Bewegung der verschiedenen Drehsternelemente ist so synchronisiert, dass sich in den Interaktionsbereichen jeweils Taschen der beiden Drehsternelemente direkt gegenüberstehen. Diese Synchronisation erfolgt mittels Zahnräder, welche koaxial und drehfest mit den jeweiligen Drehsternelementen verbunden sind, wobei das an den Entladestern 310 gekoppelte Zahnrad 312 mit dem Zahnrad 102 des Drehtischs 100 kämmt, das Zahnrad 382 des Zwischensterns 380 und das Zahnrad 342 des Wegführsterns 340 kämmen ebenfalls mit dem Zahnrad 312 des Ladesterns 310. Das Zahnrad 372 des Aufnahmesterns 370 schliesslich kämmt mit dem Zahnrad 382 des Zwischensterns 380.

Die Figur 8 zeigt einen Querschnitt durch den Entladestern 310 und den Zwischenstern 380 der erfindungsgemässen Vorrichtung 300 zum Wegtransport. An den Achsen der beiden Drehsternelemente sind Kurvenscheiben 314, 384 über Drehlager 315, 385 angeordnet. Durch Verdrehsicherungen 316 wird sichergestellt, dass die Kurvenscheiben 314, 384 drehfest gehalten sind. Die Finger 313, 383 der Drehsternelemente werden durch die Kurvenscheiben 314, 384 über darauf ablaufende Rollen 317, 387 während der Drehbewegung des jeweiligen Drehsternelements abhängig von der Drehposition angehoben oder abgesenkt und können somit in den Taschen 311, 381 gehalten oder aus diesen freigegeben werden. Es ist zu beachten, dass in der Figur 8 der Entladestern 310 und der Zwischenstern 380 nicht in synchronen Drehpositionen dargestellt sind. Wie aus der Figur 9 ersichtlich ist, stehen sich zwei mit Fingern 313 bzw. 383 ausgestattete Taschen 311, 381 nie im Interaktionsbereich gegenüber, vielmehr wechseln sich mit und ohne Finger 313 bzw. 383 ausgestattete Taschen 311, 383 ab.

Jeder Finger 313 des Entladesterns 310 wird abgesenkt, sobald ein Verschluss vom Drehtisch 100 in die entsprechende Tasche 311 aufgenommen worden ist und angehoben, sobald der Interaktionsbereich mit dem Zwischenstern 380 passiert wurde und der Verschluss wieder zwischen der Tasche 311 und der Führung 316 geführt ist. Jeder Finger 383 des Zwischensterns 380 wird abgesenkt, sobald ein Verschluss vom Entladerad 310 in den Interaktionsbereich mit dem Zwischenstern 380 bewegt worden und somit gleichzeitig von der mit dem Finger 383 versehenen Tasche 381 des Zwischensterns 380 und der jeweiligen Tasche 311 (ohne Finger) des Entladesterns aufgenommen ist. Der Finger 383 des Zwischensterns 380 kann wieder angehoben werden, wenn der Interaktionsbereich passiert wurde und der Verschluss zwischen der Tasche 381 und der Führung 385 geführt ist.

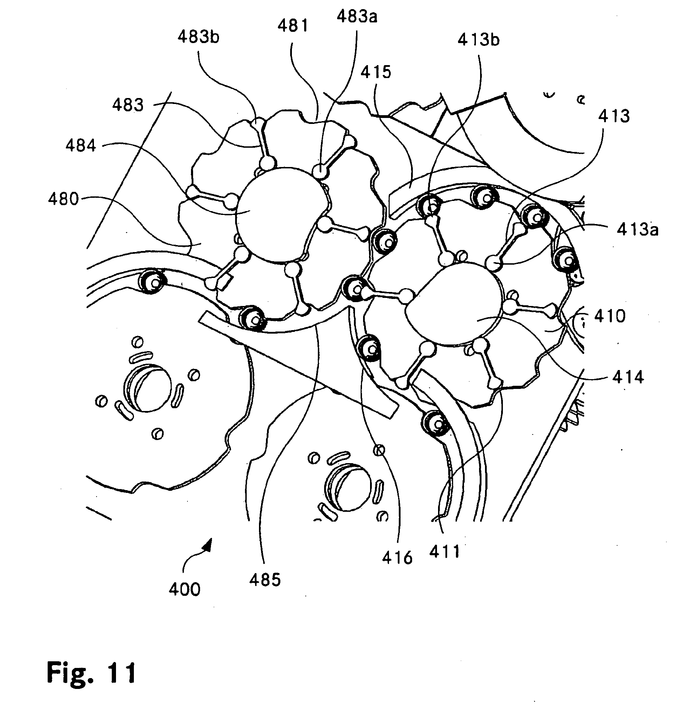

Die Figur 11 zeigt eine schematische Schrägansicht einer alternativen Ausführung eines Entladesterns 410 und eines Zwischensterns 480 einer Vorrichtung 400 zum Wegtransport. Die sonstigen Elemente sind - soweit hier nichts anderes angegeben ist - gleich ausgebildet wie bei der im Zusammenhang mit den Figuren 7, 9 und 10 vorstehend beschriebenen Vorrichtung 300. Anstelle der Finger sind am Entladestern 410 und am Zwischenstern 480 bewegliche Stössel 413, 483 angeordnet. Diese sind in einer (nicht dargestellten) jeweils radial verlaufenden Führung linear beweglich und umfassen jeweils an ihrem inneren Ende ein Ablaufelement 413a, 483a, welches auf einer drehfesten Kurve 414, 484 abläuft, sowie an ihrem äusseren Ende ein Kontaktelement 413b, 483b zum Kontaktieren der im Entladestern 410 bzw. im Zwischenstern 480 mitgeführten Verschlüsse.

Mit Stösseln ausgestattet sind diejenigen Taschen 411 des Entladesterns 410 für Werkstücke, die an den Zwischenstern 480 übergeben werden sollen sowie diejenigen Taschen 481 des Zwischensterns 480, welche keine Werkstücke aufnehmen sollen. Im Interaktionsbereich interagiert somit immer eine mit einem Stössel versehene Tasche 411, 481 des einen Drehsternelements mit einer Tasche 481, 41 ohne Stössel des anderen Drehsternelements. Die Kurve 414 ist derart ausgebildet, dass während der Drehbewegung des Entladesterns 410 die Stössel 413 grundsätzlich nach innen zurückgezogen sind und somit die Taschen 411 freigegeben sind und Verschlüsse aufnehmen können. Lediglich im Bereich des Auslaufs des Interaktionsbereichs mit dem Zwischenstern 480 werden die Stössel durch die Kurve 414 nach aussen gedrückt und bewegen somit die in den entsprechenden Taschen 411 aufgenommenen Verschlüsse in die gegenüberliegenden Taschen 481 des Zwischensterns 480.

Die Stössel 483 des Zwischensterns 480 sind generell in ihrer äusseren Position. Lediglich am Einlauf des Interaktionsbereichs sind auch die Stössel 483 des Zwischensterns 480 aufgrund der Form der Kurve 484 radial nach innen zurückgezogen, um die Passage der im Entladestern 410 angeförderten Werkstücke durch den Interaktionsbereich zu ermöglichen. Am auslaufenden Ende des Interaktionsbereichs werden die Stössel 483 des Zwischensterns 480 radial nach aussen bewegt, so dass das in der entsprechenden Tasche 481 aufgenommene bzw. nicht aufzunehmende Werkstück in der gegenüberliegenden Tasche 411 des Entladesterns 410 gehalten bleibt. Vor und nach dem Durchgang des Interaktionsbereichs werden die Verschlüsse durch die mit den Drehsternelementen zusammenwirkenden Führungen 415 bzw. 416, 485 in den Taschen 411, 481 gehalten.

Die vorstehend beschriebenen Ausführungsformen der Vorrichtungen zur Zuführung und zum Wegführen von Werkstücken stellen lediglich Beispiele dar. Sie können in vielerlei Hinsicht abgewandelt werden. So können zum Beispiel viele der Elemente jeweils sowohl oberhalb der Drehsterne als auch unterhalb derselben angeordnet werden. Die Geometrie der verschiedenen Elemente kann anders gewählt werden und insbesondere den Dimensionen der zu- und wegzuführenden Werkstücke angepasst werden.

Wie oben erwähnt, können auch bei der Vorrichtung zur Zuführung wahlweise Finger oder Stössel eingesetzt werden. Bei der oben dargestellten Ausführungsform der Erfindung können beispielsweise diejenigen Taschen des Zwischensterns mit Fingern bestückt sein, welche vom Beschickungsstern mit Verschlüssen beschickt werden, sowie diejenigen Taschen des Ladesterns, welche vom Ladestern beschickt werden. Die Finger des Zwischensterns gewährleisten, dass die Verschlüsse im Einlauf des Interaktionsbereichs zunächst am Zwischenstern gehalten bleiben und erst nach Öffnen des Fingers im Mittelteil des Interaktionsbereichs in die Taschen des Ladesterns abgegeben werden. Die Finger des Ladesterns stellen sicher, dass die bereits durch die erste Zuführeinrichtung an den Ladestern abgegebenen Verschlüsse während des Durchgangs durch den Interaktionsbereich in den entsprechenden Taschen gehalten bleiben. Die mit dem Zwischenstern zusammenwirkende Aussenführung kann bis zur Innenfläche der mit dem Ladestern zusammenwirkenden Führung gekürzt werden. Der Zwischenstern und der Ladestern können auf derselben Ebene angeordnet werden, so dass die Verschlüsse beim Übergang vom Zwischenstern auf den Ladestern keinen Absatz überwinden müssen.

Bei einer Lösung mit Stösseln sind beispielsweise sämtliche Taschen des Zwischensterns mit je einem Stössel versehen. Die Stössel werden von zwei unterschiedlichen feststehenden Kurvenscheiben gesteuert, d. h. jeder zweite Stössel wird von der einen und die übrigen Stössel werden von der anderen Kurve gesteuert. Die Stössel, welche mit leeren Taschen des Zwischensterns zusammenwirken, werden am Eingang des Interaktionsbereichs radial nach aussen bewegt, während des Durchgangs durch den Interaktionsbereich zunächst zurückgezogen und anschliessend wieder nach aussen bewegt, so dass die im Ladestern geführten Verschlüsse während der Passage durch den Interaktionsbereich ständig zwischen dem Stössel und dem Grund der Tasche des Ladesterns geführt sind. Die anderen Stössel, welche beschickten Taschen des Zwischensterns zugeordnet sind, sind zunächst zurückgezogen und werden erst im Bereich des Ausgangs des Interaktionsbereichs radial nach aussen verfahren, so dass die Verschlüsse in die Taschen des Ladesterns bewegt werden. Auch hier kann die mit dem Zwischenstern zusammenwirkende Aussenführung bis zur Innenfläche der mit dem Ladestern zusammenwirkenden Führung gekürzt werden, und der Zwischenstern und der Ladestern können auf derselben Ebene angeordnet werden.

Die gezeigte Anordnung kann als Ganzes ausgeführt sein, oder es sind nur die Vorrichtung zur Zuführung oder die Vorrichtung zum Wegführen in der dargestellten Art ausgeführt. Die Vorrichtungen können auch so gestaltet sein, dass sie mit vorhandenen Bearbeitungseinrichtungen zusammenwirken können und beispielsweise bei solchen nachgerüstet werden können. In diesem Fall kann ein gegebenenfalls bereits an der Bearbeitungseinrichtung vorhandener Lade- oder Entladestern weiter verwendet werden, oder die Zuführungs- bzw. Wegführungsvorrichtung wird als Ganzes ersetzt.

Zusammenfassend ist festzustellen, dass durch die Erfindung Vorrichtungen zur Zuführung und zum Wegtransport von Werkstücken geschaffen werden, welche die mehrbahnige Zu- bzw. Wegführung von Werkstücken erlauben, welche einfach aufgebaut und für hohe Produktionsgeschwindigkeiten geeignet sind.

## Patentansprüche

1. Vorrichtung zur Zuführung von Werkstücken zu einem um eine erste Achse drehbaren Drehtisch (100) einer Bearbeitungseinrichtung, umfassend
a) einen um eine zur ersten Achse parallele zweite Achse drehbaren Ladestern (210) mit umfangsseitigen Aufnahmen (211) für die Werkstücke, welcher derart ausgebildet ist und angeordnet werden kann, dass bei gleichzeitiger synchronisierter Drehbewegung des Ladesterns (210) und des Drehtischs (100) in nachfolgenden Aufnahmen des Ladesterns (210) aufgenommene Werkstücke nacheinander in entsprechende Aufnahmen (101) des Drehtischs (100) übergeben werden können;
**gekennzeichnet durch**
b) eine erste Zuführeinrichtung (230, 230.2, 230.3, 230.4), welche derart ausgebildet ist, dass sie den Ladestern (210) teilweise mit Werkstücken beschicken kann; und
c) eine zweite Zuführeinrichtung (260, 260.2, 260.3, 260.4), welche in Drehrichtung des Ladesterns (210) vor der ersten Zuführeinrichtung (230, 230.2, 230.3, 230.4) angeordnet und derart ausgebildet ist, dass sie von der ersten Zuführeinrichtung (230, 230.2, 230.3, 230.4) nicht beschickte Aufnahmen (211) des Ladesterns (210) mit Werkstücken beschicken kann.

2. Vorrichtung nach Anspruch 1, **dadurch gekennzeichnet, dass** die zweite Zuführeinrichtung (260, 260.2, 260.3, 260.4) einen als Drehstern ausgebildeten Zwischenstern (280, 280.3, 280.4) umfasst mit umfangsseitigen Aufnahmen (281, 281.3, 281.4) für die Werkstücke, welcher derart ausgebildet und angeordnet ist, dass bei gleichzeitiger synchronisierter Drehbewegung des Zwischensterns (280, 280.3, 280.4) und des Ladesterns (210) in Zwischenstern-Aufnahmen (281, 281.3, 281.4) aufgenommene Werkstücke nacheinander in entsprechende Aufnahmen (211) des Ladesterns (210) übergeben werden können.

3. Vorrichtung nach Anspruch 2, **dadurch gekennzeichnet, dass** die zweite Zuführeinrichtung (260, 260.2, 260.3, 260.4) weiter eine dem Zwischenstern (280, 280.3, 280.4) vorgeordnete Beschickungseinrichtung (270, 270.2, 270.3, 270.4) umfasst, welche den Zwischenstern (280.3, 280.4) teilweise mit Werkstücken beschicken kann.

4. Vorrichtung nach Anspruch 3, **dadurch gekennzeichnet, dass** die Beschickungseinrichtung ein als Drehstern ausgebildeter Beschickungsstern (270, 270.2, 270.3, 270.4) ist, mit umfangsseitigen Aufnahmen (271, 271.2, 271.3, 271.4) für die Werkstücke, welcher derart ausgebildet und angeordnet ist, dass bei gleichzeitiger synchronisierter Drehbewegung des Beschickungssterns (270, 270.2, 270.3, 270.4) und des Zwischensterns (280, 280.3, 280.4) in Aufnahmen (271, 271.2, 271.3, 271.4) des Beschickungssterns (270, 270.2, 270.3, 270.4) aufgenommene Werkstücke nacheinander in entsprechende Aufnahmen (281, 281.3, 281.4) des Zwischensterns (280, 280.3, 280.4) übergeben werden können.

5. Vorrichtung nach Anspruch 3 oder 4, **dadurch gekennzeichnet, dass** der Zwischenstern (280, 280.3, 280.4) und der Ladestern (210) derart ausgebildet und angeordnet sind, dass bei gleichzeitiger synchronisierter Drehbewegung des Zwischensterns (280, 280.3, 280.4) und des Ladesterns (210) jeweils benachbarte Aufnahmen (281, 281.3, 281.4) des Zwischensterns (280, 280.3, 280.4) und benachbarte Aufnahmen (211) des Ladesterns (210) nacheinander in einen gegenseitigen Interaktionsbereich bewegt werden.

6. Vorrichtung nach einem der Ansprüche 1 bis 5, **dadurch gekennzeichnet, dass** die erste Zuführeinrichtung (230, 230.2, 230.3, 230.4) einen als Drehstern ausgebildeten Zuführstern (240, 240.2, 240.3) umfasst mit umfangsseitigen Aufnahmen (241, 241.2, 241.3) für die Werkstücke, welcher derart ausgebildet und angeordnet ist, dass bei gleichzeitiger synchronisierter Drehbewegung des Zuführsterns (240, 240.2, 240.3) und des Ladesterns (210) in Aufnahmen (241, 241.2, 241.3) des Zuführsterns (240, 240.2, 240.3) aufgenommene Werkstücke nacheinander in entsprechende Aufnahmen (211) des Ladesterns (210) übergeben werden können.

7. Vorrichtung nach Anspruch 3 und 6, **dadurch gekennzeichnet, dass** in einem vorgegebenen Zeitintervall T, in welchem eine Anzahl von M Aufnahmen (211) des Ladesterns (210) mit entsprechenden Aufnahmen des Drehtischs (100) zusammenwirken, eine Anzahl von M/2 mit Werkstücken beschickte Aufnahmen (241) des Zuführsterns (240) mit entsprechenden Aufnahmen (211) des Ladesterns (210) zusammenwirken, wobei jede zweite Aufnahme (211) des Ladesterns (210) mit einem Werkstück beschickt wird, sowie eine Anzahl von M Aufnahmen (281) des Zwischensterns (280) mit dem Ladestern (210) zusammenwirken, wobei die Beschickungseinrichtung (270) der zweiten Zuführeinrichtung (260) derart ausgebildet ist, dass jede zweite der mit dem Ladestern (210) zusammenwirkenden Aufnahmen (281) des Zwischensterns (280) mit einem Werkstück beschickt ist.

8. Vorrichtung nach Anspruch 4 und 7, **dadurch gekennzeichnet, dass** im Zeitintervall T eine Anzahl von M/2 Aufnahmen (271) des Beschickungssterns (270) mit entsprechenden Aufnahmen (281) des Zwischensterns (280) zusammenwirken, wobei benachbarte Aufnahmen (271) des Beschickungssterns (270) mit jeweils übernächsten Aufnahmen (281) des Zwischensterns (280) zusammenwirken.

9. Vorrichtung nach einem der Ansprüche 1 bis 8, **dadurch gekennzeichnet dass** die Aufnahmen (211, 241, 241.2, 241.3, 271, 271.2, 271.3, 271.4, 281, 281.3, 281.4) des Ladesterns (210) sowie gegebenenfalls weiterer Drehsternelemente, nämlich des Zwischensterns (280, 280.3, 280.4), des Beschickungssterns (270, 270.2, 270.3, 270.4) und/oder des Zuführsterns (240, 240.2, 240.3), als umfangsseitig offene Taschen ausgebildet sind, wobei ein in einer Tasche (211, 241, 241.2, 241.3, 271, 271.2, 271.3, 271.4, 281, 281.3, 281.4) eines ersten Drehsternelements (210, 240, 240.2, 240.3 270, 270.2, 270.3, 270.4, 280, 280.3, 280.4) aufgenommenes Werkstück im Wesentlichen radial in eine Tasche (211, 241, 241.2, 241.3, 271, 271.2, 271.3, 271.4, 281, 281.3, 281.4) eines benachbarten zweiten Drehsternelements (210, 240, 240.2, 240.3 270, 270.2, 270.3, 270.4, 280, 280.3, 280.4) bewegt werden kann, wenn sich die beiden Taschen (211, 241, 241.2, 241.3, 271, 271.2, 271.3, 271.4, 281, 281.3, 281.4) in ihrem gegenseitigen Interaktionsbereich befinden.

10. Vorrichtung nach Anspruch 9, **dadurch gekennzeichnet, dass** die Taschen (211, 241, 241.2, 241.3, 271, 271.2, 271.3, 271.4, 281, 281.3, 281.4) derart ausgebildet sind, dass die Werkstücke im aufgenommenen Zustand über einen Umfang des Drehsternelements (210, 240, 240.2, 240.3 270, 270.2, 270.3, 270.4, 280, 280.3, 280.4) nach aussen ragen.

11. Vorrichtung nach Anspruch 8 oder 9, **gekennzeichnet durch** Aussenführungen (215, 216, 245, 275, 285), welche radial beabstandet umfangsseitig zu mindestens einem der Drehsternelemente (210, 240, 240.2, 240.3 270, 270.2, 270.3, 270.4, 280, 280.3, 280.4) angeordnet und derart ausgebildet sind, dass die Werkstücke in entsprechenden Kreissegmenten in den Taschen (211, 241, 241.2, 241.3, 271, 271.2, 271.3, 271.4, 281, 281.3, 281.4) des mindestens einen Drehsternelements (210, 240, 240.2, 240.3 270, 270.2, 270.3, 270.4, 280, 280.3, 280.4) gehalten bleiben.

12. Vorrichtung nach Anspruch 11, **dadurch gekennzeichnet, dass** die Drehsternelemente im Wesentlichen horizontal orientiert sind und dass Aussenführungen sowohl auf einer Unterseite als auch auf einer Oberseite der Drehsternelemente angeordnet sind.

13. Vorrichtung nach Anspruch 12, **dadurch gekennzeichnet, dass** der Zwischenstern (280) auf einer bezüglich dem Ladestern (210) höheren Ebene angeordnet ist.

14. Vorrichtung nach einem der Ansprüche 9 bis 13, **dadurch gekennzeichnet, dass** mindestens eines der Drehsternelemente bewegliche Finger aufweist, um die Werkstücke in den Taschen zu halten.

15. Vorrichtung nach einem der Ansprüche 9 bis 14, **dadurch gekennzeichnet, dass** der Zwischenstern radial bewegliche Stössel aufweist, um die Werkstücke im Interaktionsbereich zwischen dem Zwischenstern und dem Ladestern gesteuert in die Taschen des Ladesterns zu bewegen bzw. in den Taschen des Ladesterns zu halten.

16. Vorrichtung nach Anspruch 14 oder 15, **gekennzeichnet durch** eine Kurvensteuerung zum Bewegen der Finger bzw. der Stössel.

17. Vorrichtung nach einem der Ansprüche 1 bis 16, **dadurch gekennzeichnet, dass** die Drehbewegung des Drehtischs (100) und des Ladesterns (210) sowie weiterer Drehsternelemente, nämlich des Zwischensterns (280), des Beschickungssterns (270) und/oder des Zuführsterns (240), durch miteinander zusammenwirkende, drehfest mit Achsen der Drehsternelemente (210, 240, 270, 280) verbundene Zahnräder (102, 219, 242, 272, 282) synchronisiert ist.

18. Vorrichtung zum Wegtransport von Werkstücken von einem um eine erste Achse drehbaren Drehtisch (100) einer Bearbeitungseinrichtung, umfassend
a) einen um eine zur ersten Achse parallele zweite Achse drehbaren Entladestern (310) mit umfangsseitigen Aufnahmen (311) für die Werkstücke, welcher derart ausgebildet ist und angeordnet werden kann, dass bei gleichzeitiger synchronisierter Drehbewegung des Drehtischs (100) und des Entladesterns (310) in nachfolgenden Aufnahmen (311) des Drehtischs (100) aufgenommene Werkstücke nacheinander in entsprechende Aufnahmen (311) des Entladesterns (310) übergeben werden können;
**gekennzeichnet durch**
b) eine erste Wegführeinrichtung (360), welche derart ausgebildet ist, dass sie einen Teil der im Entladestern (310) aufgenommenen Werkstücke aus dem Entladestern (310) wegtransportieren kann; und
c) eine zweite Wegführeinrichtung (330), welche in Drehrichtung des Entladesterns (310) vor der ersten Wegführeinrichtung (360) angeordnet und derart ausgebildet ist, dass sie von der ersten Wegführeinrichtung (360) nicht wegtransportierte, im Entladestern (310) aufgenommene Werkstücke aus dem Entladestern (310) wegtransportieren kann.

19. Vorrichtung nach Anspruch 18, **dadurch gekennzeichnet, dass** die erste Wegführeinrichtung (360) einen als Drehstern ausgebildeten Zwischenstern (380) umfasst mit umfangsseitigen Aufnahmen (381) für die Werkstücke, welcher derart ausgebildet und angeordnet ist, dass bei gleichzeitiger synchronisierter Drehbewegung des Zwischensterns (380) und des Entladesterns (310) in Entladestern-Aufnahmen (311) aufgenommene Werkstücke nacheinander in entsprechende Aufnahmen (381) des Zwischensterns (380) übergeben werden können.

20. Vorrichtung nach Anspruch 19, **dadurch gekennzeichnet, dass** die erste Wegführeinrichtung (360) weiter einen dem Zwischenstern (380) nachgeordneten Aufnahmestern (370) aufweist, mit umfangsseitigen Aufnahmen (371) für die Werkstücke, welcher derart ausgebildet und angeordnet ist, dass bei gleichzeitiger synchronisierter Drehbewegung des Zwischensterns (380) und des Aufnahmesterns (370) in Aufnahmen (381) des Zwischensterns (380) aufgenommene Werkstücke nacheinander in entsprechende Aufnahmen (371) des Aufnahmesterns (370) übergeben werden können.

21. Vorrichtung nach Anspruch 19 oder 20, **dadurch gekennzeichnet, dass** der Zwischenstern (380) und der Entladestern (310) derart ausgebildet und angeordnet sind, dass bei gleichzeitiger synchronisierter Drehbewegung des Zwischensterns (380) und des Entladesterns (310) jeweils benachbarte Aufnahmen (381) des Zwischensterns (380) und benachbarte Aufnahmen (311) des Entladesterns (310) nacheinander in einen gegenseitigen Interaktionsbereich bewegt werden.

22. Vorrichtung nach einem der Ansprüche 18 bis 21, **dadurch gekennzeichnet, dass** die zweite Wegführeinrichtung (330) einen als Drehstern ausgebildeten Wegführstern (340) umfasst mit umfangsseitigen Aufnahmen (341) für die Werkstücke, welcher derart ausgebildet und angeordnet ist, dass bei gleichzeitiger synchronisierter Drehbewegung des Wegführsterns (340) und des Entladesterns (310) in Aufnahmen (311) des Entladesterns (310) aufgenommene Werkstücke nacheinander in entsprechende Aufnahmen (341) des Wegführsterns (340) übergeben werden können.

23. Vorrichtung nach Anspruch 19 und 22, **dadurch gekennzeichnet, dass** in einem vorgegebenen Zeitintervall T, in welchem eine Anzahl von M Aufnahmen (311) des Entladesterns (310) mit entsprechenden Aufnahmen (101) des Drehtischs (100) zusammenwirken, eine Anzahl von M/2 mit Werkstücken beschickte Aufnahmen (311) des Entladesterns (310) mit entsprechenden Aufnahmen (341) des Wegführsterns (340) zusammenwirken, wobei aus jeder zweiten Aufnahme (311) des Entladesterns (310) ein Werkstück in eine entsprechende Aufnahme (341) des Wegführsterns (340) transportiert wird, sowie eine Anzahl von M Aufnahmen (381) des Zwischensterns (380) mit dem Entladestern (310) zusammenwirken, wobei die Vorrichtung derart ausgebildet und gesteuert ist, dass Werkstücke jeder zweiten Aufnahme (311) des Entladesterns (310) aus dem Entladestern (310) in den Zwischenstern (380) transportiert werden

24. Vorrichtung nach Anspruch 23, **dadurch gekennzeichnet, dass** im Zeitintervall T eine Anzahl von M/2 Aufnahmen (341) des Wegführsterns (340) mit entsprechenden Aufnahmen (381) des Zwischensterns (380) zusammenwirken, wobei benachbarte Aufnahmen (341) des Wegführsterns (340) mit jeweils übernächsten Aufnahmen (381) des Zwischensterns (380) zusammenwirken.

25. Vorrichtung nach einem der Ansprüche 18 bis 24, **dadurch gekennzeichnet dass** die Aufnahmen (311, 341, 371, 381) des Entladesterns (310) sowie gegebenenfalls weiterer Drehsternelemente, nämlich des Zwischensterns (380), des Aufnahmesterns (370) und/oder des Wegführsterns (340), als umfangsseitig offene Taschen (311, 341, 371, 381) ausgebildet sind, wobei ein in einer Tasche (311, 341, 371, 381) eines ersten Drehsternelements (310, 340, 370, 380) aufgenommenes Werkstück im Wesentlichen radial in eine Tasche (311, 341, 371, 381) eines benachbarten zweiten Drehsternelements (310, 340, 370, 380) bewegt werden kann, wenn sich die beiden Taschen (311, 341, 371, 381) in ihrem gegenseitigen Interaktionsbereich befinden.

26. Vorrichtung nach Anspruch 25, **dadurch gekennzeichnet, dass** die Taschen (311, 341, 371, 381) derart ausgebildet sind, dass die Werkstücke im aufgenommenen Zustand über einen Umfang des Drehsternelements (310, 340, 370, 380) nach aussen ragen.

27. Vorrichtung nach Anspruch 26, **gekennzeichnet durch** Aussenführungen (315, 316, 345, 375, 376, 385), welche radial beabstandet umfangsseitig zu den Drehsternelementen (310, 340, 370, 380) angeordnet und derart ausgebildet sind, dass die Werkstücke in entsprechenden Kreissegmenten in den Taschen (311, 341, 371, 381) der Drehsternelemente (310, 340, 370, 380) gehalten bleiben.

28. Vorrichtung nach einem der Ansprüche 25 bis 27, **dadurch gekennzeichnet, dass** der Entladestern (310) und der Zwischenstern (380) bewegliche Finger (313, 383) aufweisen, um die Werkstücke in den Taschen (311, 381) zu halten und gesteuert freizugeben.

29. Vorrichtung nach einem der Ansprüche 25 bis 27, **dadurch gekennzeichnet, dass** der Entladestern (410) und der Zwischenstern (480) radial bewegliche Stössei (413, 483) aufweisen, um die Werkstücke im Interaktionsbereich zwischen dem Entladestern (410) und dem Zwischenstern (480) gesteuert in die Taschen (411, 481) des jeweils anderen Drehsternelements (410, 480) zu bewegen.

30. Vorrichtung nach Anspruch 28 oder 29, **gekennzeichnet durch** eine Kurvensteuerung (314, 384; 414, 484) zum Bewegen der Finger (313, 383) beziehungsweise der Stössel (413, 483).

31. Bearbeitungsanordnung umfassend
a) eine Vorrichtung (200) zur Zuführung von Werkstücken gemäss einem der Ansprüche 1 bis 17;
b) eine Bearbeitungsstation mit einem Drehtisch (100); sowie
c) eine Vorrichtung (300) zum Wegtransport von Werkstücken gemäss einem der Ansprüche 18 bis 30.

## Claims

1. Device for feeding workpieces to a rotary table (100), which can rotate about a first axis of a machining device, comprising
a) a loading star (210) which can rotate about a second axis which is parallel to the first axis, has circumferential receptacles (211) for the workpieces and is embodied and can be arranged in such a way that given simultaneous, synchronized rotary movement of the loading star (210) and of the rotary table (100), workpieces which are held in successive receptacles in the loading star (210) can be successively transferred into corresponding receptacles (101) in the rotary table (100);
**characterized by**
b) a first feed device (230, 230.2, 230.3, 230.4) which is designed in such a way that it can partially charge the loading star (210) with workpieces; and
c) a second feed device (260, 260.2, 260.3, 260.4) which is arranged ahead of the first feed device (230, 230.2, 230.3, 230.4) in the direction of rotation of the loading star (210) and is embodied in such a way that it can charge workpieces into receptacles (211) in the loading star (210) which have not been charged by the first feed device (230, 230.2, 230.3, 230.4).

2. Device according to Claim 1, **characterized in that** the second feed device (260, 260.2, 260.3, 260.4) comprises an intermediate star (280, 280.3, 280.4) which is embodied as a rotary star and has circumferential receptacles (281, 281.3, 281.4) for the workpieces and is embodied and arranged in such a way that given simultaneous, synchronized rotary movement of the intermediate star (280, 280.3, 280.4) and of the loading star (210), workpieces which are held in intermediate star receptacles (281, 281.3, 281.4) can be successively transferred into corresponding receptacles (211) in the loading star (210).

3. Device according to Claim 2, **characterized in that** the second feed device (260, 260.2, 260.3, 260.4) also comprises a charging device (270, 270.2, 270.3, 270.4) which is arranged ahead of the intermediate star (280, 280.3, 280.4) and which can charge the intermediate star (280.3, 280.4) partially with workpieces.

4. Device according to Claim 3, **characterized in that** the charging device is a charging star (270, 270.2, 270.3, 270.4) which is embodied as a rotary (270, 270.2, 270.3, 270.4) star and is embodied with circumferential receptacles (271, 271.2, 271.3, 271.4) for the workpieces and is arranged in such a way that given simultaneous, synchronized rotary movement of the charging star (270, 270.2, 270.3, 270.4) and of the intermediate star (280, 280.3, 280.4), workpieces which are held in receptacles in the charging star (270, 270.2, 270.3, 270.4) can be successively transferred into corresponding receptacles (281, 281.3, 281.4) in the intermediate star (280, 280.3, 280.4).

5. Device according to Claim 3 or 4, **characterized in that** the intermediate star (280, 280.3, 280.4) and the loading star (210) are embodied and arranged in such a way that given simultaneous, synchronized rotary movement of the intermediate star (280, 280.3, 280.4) and of the loading star (210), respectively adjacent receptacles in the intermediate star (280, 280.3, 280.4) and adjacent receptacles (211) in the loading star (210) can be successively moved into a mutual interaction region.

6. Device according to one of Claims 1 to 5, **characterized in that** the first feed device (230, 230.2, 230.3, 230.4) comprises a feed star (240, 240.2, 240.3) which is embodied as a rotary star, has circumferential receptacles (241, 241.2, 241.3) for the workpieces and is embodied and arranged in such a way that given simultaneous, synchronized rotary movement of the feed star (240, 240.2, 240.3) and of the loading star (210), workpieces which are held in receptacles (241, 241.2, 241.3) in the feed star (240, 240.2, 240.3) can be successively transferred into corresponding receptacles (211) in the loading star (210).

7. Device according to Claim 3 and 6, **characterized in that** in a predefined time interval T in which a number of M receptacles (211) in the loading star (210) interact with corresponding receptacles in the rotary table (100), a number of M/2 receptacles (241) in the feed star (240) which are charged with workpieces interact with corresponding receptacles (211) in the loading star (210), wherein every second receptacle (211) in the loading star (210) is charged with a workpiece, and a number of M receptacles (281) in the intermediate star (280) interact with the loading star (210), wherein the charging device (270) of the second feed device (260) is embodied in such a way that every second receptacle of the receptacles (281) of the intermediate star (280, 280.3, 280.4) which interact with the loading star (210) is charged with a workpiece.

8. Device according to Claim 4 and 7, **characterized in that**, in the time interval T, a number of M/2 receptacles (271) in the charging star (270) interact with corresponding receptacles (281) in the intermediate star (280), wherein adjacent receptacles (271) in the charging star (270) interact with the respective next but one receptacle (281) in the intermediate star (280).

9. Device according to one of Claims 1 to 8, **characterized in that** the receptacles (211, 241, 241.2, 241.3, 271, 271.2, 271.3, 271.4, 281, 281.3, 281.4) in the loading star (210) as well as, if appropriate, further rotary star elements, specifically the intermediate star (280, 280.3, 280.4), the charging star (270, 270.2, 270.3, 270.4) and/or the feed star (240, 240.2, 240.3), are embodied as pockets which are open at the circumference,. and wherein a workpiece which is held in a pocket (211, 241, 241.2, 241.3, 271, 271.2, 271.3, 271.4, 281, 281.3, 281.4) in a first rotary star element (210, 240, 240.2, 240.3, 270, 270.2, 270.3, 270.4, 280, 280.3, 280.4) can be moved essentially radially into a pocket (211, 241, 241.2, 241.3, 271, 271.2, 271.3, 271.4, 281, 281.3, 281.4) in an adjacent second rotary star element (210, 240, 240.2, 240.3, 270, 270.2, 270.3, 270.4, 280, 280.3, 280.4) if the two pockets (211, 241, 241.2, 241.3, 271, 271.2, 271.3, 271.4, 281, 281.3, 281.4) are located in their mutual interaction region.

10. Device according to Claim 9, **characterized in that** the pockets (211, 241, 241.2, 241.3, 271, 271.2, 271.3, 271.4, 281, 281.3, 281.4) are embodied in such a way that in the held state the workpieces project outward beyond a circumference of the rotary star element (210, 240, 240.2, 240.3, 270, 270.2, 270.3, 270.4, 280, 280.3, 280.4).

11. Device according to Claim 8 or 9, **characterized by** external guides (215, 216, 245, 275, 285) which are arranged and embodied radially spaced apart at the circumference from at least one of the rotary star elements (210, 240, 240.2, 240.3, 270, 270.2, 270.3, 270.4, 280, 280.3, 280.4), and in that the workpieces remain secured in corresponding circular segments in the pockets (211, 241, 241.2, 241.3, 271, 271.2, 271.3, 271.4, 281, 281.3, 281.4) in the at least one rotary star element (210, 240, 240.2, 240.3, 270, 270.2, 270.3, 270.4, 280, 280.3, 280.4).

12. Device according to Claim 11, **characterized in that** the rotary star elements are orientated essentially horizontally, and **in that** external guides are arranged both on an underside and on an upper side of the rotary star elements.

13. Device according to Claim 12, **characterized in that** the intermediate star (280) is arranged on a plane which is higher than the loading star (210).

14. Device according to one of Claims 9 to 13, **characterized in that** at least one of the rotary star elements has movable fingers in order to secure the workpieces in the pockets.

15. Device according to one of Claims 9 to 14, **characterized in that** the intermediate star has radially movable tappets in order to move the workpieces in the interaction region between the intermediate star and the loading star into the pockets of the loading star in a controlled fashion or to secure them in the pockets of the loading star in a controlled fashion.

16. Device according to Claim 14 or 15, **characterized by** a cam controller for moving the fingers or the tappet.

17. Device according to one of Claims 1 to 16, **characterized in that** the rotary movement of the rotary table (100) and of the loading star (210) as well as further rotary star elements, specifically the intermediate star (280), the charging star (270) and/or the feed star (240), is synchronized by gearwheels (102, 219, 242, 272, 282) which interact with one another and are connected in a rotationally fixed fashion to axes of the rotary star elements (210, 240, 270, 280).

18. Device for transporting workpieces away from a rotary table (100) of a machining device which can rotate about a first axis, comprising
a) an unloading star (310) which can rotate about a second axis parallel to the first axis, which has circumferential receptacles (311) for the workpieces and is embodied and can be arranged in such a way that given simultaneous, synchronized rotary movement of the rotary table (100) and of the unloading star (310), workpieces which are held in successive receptacles (311) in the rotary table (100) can be transferred successively into corresponding receptacles (311) in the unloading star (210);
**characterized by**
b) a first removal device (360) which is embodied in such a way that it can transport away some of the workpieces held in the unloading star (310) from the unloading star (310); and
c) a second removal device (330) which is arranged ahead of the first removal device (360) in the direction of rotation of the unloading star (310) and embodied in such a way that it can transport away from the unloading star (310), workpieces which have not been transported away by the first removal device (360) and are held in the unloading star (310).

19. Device according to Claim 18, **characterized in that** the first removal device (360) comprises an intermediate star (380) which is embodied as a rotary star, has circumferential receptacles (381) for the workpieces and is embodied and arranged in such a way that given simultaneous, synchronized rotary movement of the intermediate star (380) and of the unloading star (310), workpieces which are held in unloading star receptacles (311) can be transferred successively into corresponding receptacles (381) in the intermediate star (380).

20. Device according to Claim 19, **characterized in that** the first removal device (360) also has a pickup star (370) which is arranged after the intermediate star (380), has circumferential receptacles (371) for the workpieces and is embodied and arranged in such a way that given simultaneous, synchronized rotary movement of the intermediate star (380) and of the pickup star (370), workpieces which are held in receptacles (381) in the intermediate star (380) can be transferred successively into corresponding receptacles (371) in the pickup star (370).

21. Device according to Claim 19 or 20, **characterized in that** the intermediate star (380) and the unloading star (310) are embodied and arranged in such a way that given simultaneous, synchronized rotary movement of the intermediate star (380) and of the unloading star (310), respectively adjacent receptacles (381) in the intermediate star (380) and adjacent receptacles in the unloading star (310) are moved successively into a mutual interaction region.

22. Device according to one of Claims 18 to 21, **characterized in that** the second removal device (330) comprises a removal star (340) which is embodied as a rotary star, has circumferential receptacles (341) for the workpieces and is embodied and arranged in such a way that given simultaneous, synchronized rotary movement of the removal star (340) and of the unloading star (310) workpieces which are held in receptacles (311) in the unloading star (310) can be transferred successively into corresponding receptacles (341) in the removal star (340).

23. Device according to Claim 19 and 22, **characterized in that,** at a predetermined time interval T in which a number of M receptacles (311) in the unloading star (310) interact with corresponding receptacles (101) in the rotary table (100), a number of M/2 receptacles (311) in the unloading star (310) which are charged with workpieces interact with corresponding receptacles (341) in the removal star (340), wherein a workpiece is transferred from every second receptacle (311) in the unloading star (310) into a corresponding receptacle (341) in the removal star (340), and a number of M receptacles (381) in the intermediate star (380) interact with the unloading star (310), wherein the device is embodied and controlled in such a way that workpieces of every second receptacle (311) in the unloading star (310) are transferred from the unloading star (310) into the intermediate star (380).

24. Device according to Claim 23, **characterized in that,** in the time interval T, a number of M/2 receptacles (341) in the removal star (340) interact with corresponding receptacles (381) in the intermediate star (380), wherein adjacent receptacles (341) in the removal star (340) interact with respective next but one receptacle (381) in the intermediate star (380).

25. Device according to one of Claims 18 to 24, **characterized in that** the receptacles (311, 341, 371, 381) in the unloading star (310), and, if appropriate, in further rotary star elements, namely in the intermediate star (380), in the pickup star (370) and/or in the removal star (340), are embodied as pockets (311, 341, 371, 381) which are open at the circumference, wherein a workpiece which is held in a pocket (311, 341, 371, 381) in a first rotary star element (310, 340, 370, 380) can be moved essentially radially into a pocket (311, 341, 371, 381) in an adjacent, second rotary star element (310, 340, 370, 380) if the two pockets (311, 341, 371, 381) are located in their mutual interaction region.

26. Device according to Claim 25, **characterized in that** the pockets (311, 341, 371, 381) are embodied in such a way that in the held state the workpieces project outward beyond a circumference of the rotary star element (310, 340, 370, 380).

27. Device according to Claim 26, **characterized by** external guides (315, 316, 345, 375, 376, 385) which are arranged and embodied radially spaced apart circumferentially from the rotary star elements (310, 340, 370, 380) in such a way that the workpieces remain secured in corresponding circular segments in the pockets (311, 341, 371, 381) in the rotary star elements (310, 340, 370, 380).

28. Device according to one of Claims 25 to 27, **characterized in that** the unloading star (310) and the intermediate star (380) have movable fingers (313, 383) in order to secure the workpieces in the pockets (311, 381) and release them in a controlled fashion.

29. Device according to one of Claims 25 to 27, **characterized in that** the unloading star (410) and the intermediate star (480) have radially moving tappets (413, 483) in order to move the workpieces in the interaction region between the unloading star (410) and the intermediate star (480) into the pockets (411, 481) of the respective other rotary star element (410, 480) in a controlled fashion.

30. Device according to Claim 28 or 29, **characterized by** a cam controller (314, 384; 414, 484) for moving the fingers (313, 383) or the tappet (413, 483).

31. Machining arrangement comprising
a) a device (200) for feeding workpieces as claimed in one of Claims 1 to 17;
b) a machining Station having a rotary table (100); and
c) a device (300) for transporting away workpieces according to one of Claims 18 to 30.

## Revendications

1. Dispositif pour délivrer des pièces à usiner à un plateau tournant (100) rotatif autour d'un premier axe d'un dispositif d'usinage, comprenant
a) une étoile de chargement (210) rotative autour d'un deuxième axe parallèle au premier axe avec des logements (211) côté périphérie pour les pièces à usiner, qui est réalisée et peut être disposée de telle sorte que lorsque le mouvement de rotation de l'étoile de chargement (210) et du plateau tournant (100) est synchronisé simultanément, des pièces à usiner logées dans des logements suivants de l'étoile de chargement (210) pouvant être transférées les unes après les autres dans des logements (101) correspondants du plateau tournant (100) ;
**caractérisé par**:
b) un premier dispositif d'amenée (230, 230.2, 230.3, 230.4) qui est réalisé de sorte à pouvoir alimenter partiellement l'étoile de chargement (210) en pièces à usiner ; et
c) un deuxième dispositif d'amenée (260, 260.2, 260.3, 260.4) qui est disposé et réalisé dans le sens de rotation de l'étoile de chargement (210) devant le premier dispositif d'amenée (230, 230.2, 230.3, 230.4) de sorte à pouvoir alimenter des logements (211) non alimentés par le premier dispositif d'amenée (230, 230.2, 230.3, 230.4) de l'étoile de chargement (210) en pièces à usiner.

2. Dispositif selon la revendication 1, **caractérisé en ce que** le deuxième dispositif d'amenée (260, 260.2, 260.3, 260.4) comprend une étoile intermédiaire (280, 280.3, 280.4) réalisée comme une étoile rotative avec des logements côté périphérie (281, 281.3, 281.4) pour les pièces à usiner, qui est réalisée et disposée de telle sorte que lorsque le mouvement de rotation de l'étoile intermédiaire (280, 280.3, 280.4) et de l'étoile de chargement (210) est synchronisé simultanément, des pièces à usiner logées dans des logements de l'étoile intermédiaire (281, 281.3, 281.4) peuvent être transférées les unes après les autres dans des logements (211) correspondants de l'étoile de chargement (210).

3. Dispositif selon la revendication 2, **caractérisé en ce que** le deuxième dispositif d'amenée (260, 260.2, 260.3, 260.4) comprend en outre un dispositif d'alimentation (270, 270.2, 270.3, 270.4) disposé en amont de l'étoile intermédiaire (280, 280.3, 280.4), qui peut alimenter partiellement l'étoile intermédiaire (280.3, 280.4) en pièces à usiner.

4. Dispositif selon la revendication 3, **caractérisé en ce que** le dispositif d'alimentation est une étoile d'alimentation (270, 270.2, 270.3, 270.4) réalisée comme une étoile rotative, avec des logements côté périphérie (271, 271.2, 271.3, 271.4) pour les pièces à usiner, qui est réalisée et disposée de telle sorte que lorsque le mouvement de rotation de l'étoile d'alimentation (270, 270.2, 270.3, 270.4) et de l'étoile intermédiaire (280, 280.3, 280.4) est synchronisé simultanément, des pièces à usiner logées dans des logements (271, 271.2, 271.3, 271.4) de l'étoile d'alimentation (270, 270.2, 270.3, 270.4) peuvent être transférées les unes après les autres dans des logements (281, 281.3, 281.4) correspondants de l'étoile intermédiaire (280, 280.3, 280.4).

5. Dispositif selon la revendication 3 ou 4, **caractérisé en ce que** l'étoile intermédiaire (280, 280.3, 280.4) et l'étoile de chargement (210) sont réalisées et disposées de telle sorte que lorsque le mouvement de rotation de l'étoile intermédiaire (280, 280.3, 280.4) et de l'étoile de chargement (210) est synchronisé simultanément, des logements (281, 281.3, 281.4) respectivement contigus de l'étoile intermédiaire (280, 280.3, 280.4) et des logements (211) contigus de l'étoile de chargement (210) sont déplacés les uns après les autres dans une zone d'interaction mutuelle.

6. Dispositif selon l'une quelconque des revendications 1 à 5, **caractérisé en ce que** le premier dispositif d'amenée (230, 230.2, 230.3, 230.4) comprend une étoile d'amenée (240, 240.2, 240.3) réalisée comme une étoile rotative avec des logements côté périphérie (241, 241.2, 241.3) pour les pièces à usiner, qui est réalisée et disposée de telle sorte que lorsque le mouvement de rotation de l'étoile d'amenée (240, 240.2, 240.3) et de l'étoile de chargement (210) est synchronisé simultanément, des pièces à usiner logées dans des logements (241, 241.2, 241.3) de l'étoile d'amenée (240, 240.2, 240.3) peuvent être transférées les unes après les autres dans des logements (211) correspondants de l'étoile de chargement (210).

7. Dispositif selon la revendication 3 et 6, **caractérisé en ce que** dans un intervalle de temps prédéféni T, dans lequel un nombre M de logements (211) de l'étoile de chargement (210) coopère avec des logements correspondants du plateau tournant (100), un nombre M/2 de logements (241) alimentés en pièces à usiner de l'étoile d'amenée (240) coopère avec des logements (211) correspondants de l'étoile de chargement (210), chaque deuxième logement (211) de l'étoile de chargement (210) étant alimenté en une pièce à usiner, ainsi qu'un nombre de logements M (281) de l'étoile intermédiaire (280) coopère avec l'étoile de chargement (210), le dispositif d'alimentation (270) du deuxième dispositif d'amenée (260) étant réalisé de telle sorte que chaque deuxième logement des logements (281) coopérant avec l'étoile de chargement (210) de l'étoile intermédiaire (280) soit alimenté en une pièce à usiner.

8. Dispositif selon la revendication 4 et 7, **caractérisé en ce que** dans l'intervalle de temps T, un nombre M/2 de logements (271) de l'étoile d'alimentation (270) coopère avec des logements (281) correspondants de l'étoile intermédiaire (280), des logements contigus (271) de l'étoile d'alimentation (270) coopérant respectivement avec des logements (281) suivants de l'étoile intermédiaire (280).

9. Dispositif selon l'une quelconque des revendications 1 à 8, **caractérisé en ce que** les logements (211, 241, 241.2, 241.3, 271, 271.2, 271.3, 271.4, 281, 281.3, 281.4) de l'étoile de chargement (210) ainsi qu'éventuellement d'autres éléments d'étoile tournante à savoir de l'étoile intermédiaire (280, 280.3, 280.4), de l'étoile d'alimentation (270, 270.2, 270.3, 270.4) et/ou de l'étoile d'amenée (240, 240.2, 240.3) sont réalisés comme des poches ouvertes côté périphérie, une pièce à usiner logée dans une poche (211, 241, 241.2, 241.3, 271, 271.2, 271.3, 271.4, 281, 281.3, 281.4) d'un premier élément d'étoile rotative (210, 240, 240.2, 240.3, 270, 270.2, 270.3, 270.4, 280, 280.3, 280.4) pouvant être déplacée essentiellement radialement dans une poche (211, 241, 241.2, 241.3, 271, 271.2, 271.3, 271.4, 281, 281.3, 281.4) d'un deuxième élément d'étoile rotative (210, 240, 240.2, 240.3, 270, 270.2, 270.3, 270.4, 280, 280.3, 280.4) contigu lorsque les deux poches (211, 241, 241.2, 241.3, 271, 271.2, 271.3, 271.4, 281, 281.3, 281.4) se trouvent dans leur zone d'interaction mutuelle.

10. Dispositif selon la revendication 9, **caractérisé en ce que** les poches (211, 241, 241.2, 241.3, 271, 271.2, 271.3, 271.4, 281, 281.3, 281.4) sont réalisées de telle sorte que les pièces à usiner dépassent vers l'extérieur à l'état logé sur une périphérie de l'élément d'étoile rotative (210, 240, 240.2, 240.3, 270, 270.2, 270.3, 270.4, 280, 280.3, 280.4).

11. Dispositif selon la revendication 8 ou 9, **caractérisé par** des guidages extérieurs (215, 216, 245, 275, 285) qui sont disposés et réalisés à distance radiale côté périphérie par rapport à au moins l'un des éléments d'étoile rotative (210, 240, 240.2, 240.3, 270, 270.2, 270.3, 270.4, 280, 280.3, 280.4) de telle sorte que les pièces à usiner restent maintenues dans des segments de cercle correspondants dans les poches (211, 241, 241.2, 241.3, 271, 271.2, 271.3, 271.4, 281, 281.3, 281.4) de l'au moins un élément d'étoile rotative (210, 240, 240.2, 240.3, 270, 270.2, 270.3, 270.4, 280, 280.3, 280.4).

12. Dispositif selon la revendication 11, **caractérisé en ce que** les éléments d'étoile rotative sont orientés essentiellement horizontalement et **en ce que** des guidages extérieurs sont disposés aussi bien sur un côté inférieur que sur un côté supérieur des éléments d'étoile rotative.

13. Dispositif selon la revendication 12, **caractérisé en ce que** l'étoile intermédiaire (280) est disposée sur un plan supérieur par rapport à l'étoile de chargement (210).

14. Dispositif selon l'une quelconque des revendications 9 à 13, **caractérisé en ce qu'**au moins l'un des éléments d'étoile rotative présente des doigts mobiles afin de maintenir les pièces à usiner dans les poches.

15. Dispositif selon l'une quelconque des revendications 9 à 14, **caractérisé en ce que** l'étoile intermédiaire présente des poussoirs radialement mobiles afin de déplacer de manière commandée les pièces à usiner dans la zone d'interaction entre l'étoile intermédiaire et l'étoile de chargement dans les poches de l'étoile de chargement ou de les maintenir dans les poches de l'étoile de chargement.

16. Dispositif selon la revendication 14 ou 15, **caractérisé par** une commande à cames servant à déplacer les doigts ou les poussoirs.

17. Dispositif selon l'une quelconque des revendications 1 à 16, **caractérisé en ce que** le mouvement de rotation du plateau tournant (100) et de l'étoile de chargement (210) ainsi que d'autres éléments d'étoile rotative à savoir de l'étoile intermédiaire (280), de l'étoile d'alimentation (270) et/ou de l'étoile d'amenée (240) est synchronisé par des roues dentées (102, 219, 242, 272, 282) coopérant les unes avec les autres, reliées de manière solidaire en rotation aux axes des éléments d'étoile rotative (210, 240, 270, 280).

18. Dispositif d'évacuation de pièces à usiner d'un plateau tournant (100) rotatif autour d'un premier axe d'un dispositif d'usinage comprenant
a) une étoile de déchargement (310) rotative autour d'un deuxième axe parallèle au premier axe avec des logements (311) côté périphérie pour les pièces à usiner, qui est réalisée et peut être disposée de telle sorte que lorsque le mouvement de rotation du plateau tournant (100) et de l'étoile de déchargement (310) est synchronisé simultanément, des pièces à usiner logées dans des logements (311) suivants du plateau tournant (100) pouvant être transférées les unes après les autres dans des logements (311) correspondants de l'étoile de déchargement (310) ;
**caractérisé par**
b) un premier dispositif d'évacuation (360) qui est réalisé de sorte à pouvoir évacuer de l'étoile de déchargement (310) une partie des pièces à usiner logées dans l'étoile de déchargement (310) ; et
c) un deuxième dispositif d'évacuation (330) qui est disposé et réalisé dans le sens de rotation de l'étoile de déchargement (310) devant le premier dispositif d'évacuation (360) de sorte à pouvoir évacuer de l'étoile de déchargement (310) des pièces à usiner logées dans l'étoile de déchargement (310), non évacuées par le premier dispositif d'évacuation (360).

19. Dispositif selon la revendication 18, **caractérisé en ce que** le premier dispositif d'évacuation (360) comprend une étoile intermédiaire (380) réalisée comme une étoile rotative avec des logements (381) côté périphérie pour les pièces à usiner, qui est réalisée et disposée de telle sorte que lorsque le mouvement de rotation de l'étoile intermédiaire (380) et de l'étoile de déchargement (310) est synchronisé simultanément, des pièces à usiner logées dans des logements de l'étoile de déchargement (311) peuvent être transférées les unes après les autres dans des logements (381) correspondants de l'étoile intermédiaire (380).

20. Dispositif selon la revendication 19, **caractérisé en ce que** le premier dispositif d'évacuation (360) présente encore une étoile de logement(370) disposée en aval de l'étoile intermédiaire (380), avec des logements (371) côté périphérie pour les pièces à usiner, qui est réalisée et disposée de telle sorte que lorsque le mouvement de rotation de l'étoile intermédiaire (380) et de l'étoile de logement (370) est synchronisé simultanément, des pièces à usiner logées dans des logements (381) de l'étoile intermédiaire (380) peuvent être transférées les unes après les autres dans des logements (371) correspondants de l'étoile de logement (370).

21. Dispositif selon la revendication 19 ou 20, **caractérisé en ce que** l'étoile intermédiaire (380) et l'étoile de déchargement (310) sont réalisées et disposées de telle sorte que lorsque le mouvement de rotation de l'étoile intermédiaire (380) et de l'étoile de déchargement (310) est synchronisé simultanément, des logements (381) respectivement contigus de l'étoile intermédiaire (380) et des logements (311) contigus de l'étoile de déchargement (310) peuvent être déplacés les uns après les autres dans une zone d'interaction mutuelle.

22. Dispositif selon l'une quelconque des revendications 18 à 21, **caractérisé en ce que** le deuxième dispositif d'évacuation (330) comprend une étoile d'évacuation (340) réalisée comme une étoile rotative avec des logements (341) côté périphérie pour les pièces à usiner, qui est réalisée et disposée de telle sorte que lorsque le mouvement de rotation de l'étoile d'évacuation (340) et de l'étoile de déchargement (310) est synchronisé simultanément, des pièces à usiner logées dans des logements (311) de l'étoile de déchargement (310) peuvent être transférées les unes après les autres dans des logements (341) correspondants de l'étoile d'évacuation (340).

23. Dispositif selon la revendication 19 et 22, **caractérisé en ce que** dans un intervalle de temps T prédéfini, dans lequel un nombre M de logements (311) de l'étoile de déchargement (310) coopère avec des logements (101) correspondants du plateau tournant (100), un nombre M/2 de logements (311) alimentés en pièces à usiner de l'étoile de déchargement (310) coopère avec des logements (341) correspondants de l'étoile d'évacuation (340), une pièce à usiner étant transportée de chaque deuxième logement (311) de l'étoile de déchargement (310) dans un logement (341) correspondant de l'étoile d'évacuation (340), ainsi qu'un nombre M de logements (381) de l'étoile intermédiaire (380) coopère avec l'étoile de déchargement (310), le dispositif étant réalisé et commandé de telle sorte que des pièces à usiner de chaque deuxième logement (311) de l'étoile de déchargement (310) soient transportées de l'étoile de déchargement (310) dans l'étoile intermédiaire (380).

24. Dispositif selon la revendication 23, **caractérisé en ce que** dans l'intervalle de temps T, un nombre M/2 de logements (341) de l'étoile d'évacuation (340) coopère avec des logements (381) correspondants de l'étoile intermédiaire (380), des logements (341) contigus de l'étoile d'évacuation (340) coopérant avec des logements (381) respectivement suivants de l'étoile intermédiaire (380).

25. Dispositif selon l'une quelconque des revendications 18 à 24, **caractérisé en ce que** les logements (311, 341, 371, 381) de l'étoile de déchargement (310) ainsi qu'éventuellement d'autres éléments d'étoile rotative à savoir de l'étoile intermédiaire (380), de l'étoile de logement (370) et/ou de l'étoile d'évacuation (340) sont réalisés comme des poches (311, 341, 371, 381) ouvertes côté périphérie, une pièce à usiner logée dans une poche (311, 341, 371, 381) d'un premier élément d'étoile rotative (310, 340, 370, 380) pouvant être déplacée essentiellement radialement dans une poche (311, 341, 371, 381) d'un deuxième élément d'étoile rotative (310, 340, 370, 380) contigu lorsque les deux poches (311, 341, 371, 381) se trouvent dans leur zone d'interaction mutuelle.

26. Dispositif selon la revendication 25, **caractérisé en ce que** les poches (311, 341, 371, 381) sont réalisées de telle sorte que les pièces à usiner dépassent vers l'extérieur à l'état logé sur une périphérie de l'élément d'étoile rotative (310, 340, 370,380).

27. Dispositif selon la revendication 26, **caractérisé par** des guidages extérieurs (315, 316, 345, 375, 376, 385) qui sont disposés et réalisés à distance radiale côté périphérie par rapport aux éléments d'étoile rotative (310, 340, 370, 380) de telle sorte que les pièces à usiner restent maintenues dans des segments de cercle correspondants dans les poches (311, 341, 371, 381) des éléments d'étoile rotative (310, 340, 370, 380).

28. Dispositif selon l'une quelconque des revendications 25 à 27, **caractérisé en ce que** l'étoile de déchargement (310) et l'étoile intermédiaire (380) présentent des doigts (313, 383) mobiles afin de maintenir et de libérer de manière commandée les pièces à usiner dans les poches (311,381).

29. Dispositif selon l'une quelconque des revendications 25 à 27, **caractérisé en ce que** l'étoile de déchargement (410) et l'étoile intermédiaire (480) présentent des poussoirs (413, 483) radialement mobiles afin de déplacer de manière commandée les pièces à usiner dans la zone d'interaction entre l'étoile de déchargement (410) et l'étoile intermédiaire (480) dans les poches (411, 481) respectivement de l'autre élément d'étoile rotative (410, 480).

30. Dispositif selon la revendication 28 ou 29, **caractérisé par** une commande à cames (314, 384 ; 414, 484) servant à déplacer les doigts (313, 383) ou les poussoirs (413, 483).

31. Ensemble d'usinage comprenant
a) un dispositif (200) pour délivrer des pièces à usiner selon l'une quelconque des revendications 1 à 17 ;
b) un poste d'usinage avec un plateau tournant (100) ; ainsi que
c) un dispositif (300) pour l'évacuation de pièces à usiner selon l'une quelconque des revendications 18 à 30.
